# EUROPEAN PATENT APPLICATION

(11) **EP 1 329 693 A2**
(43) Date of publication of application: **23.07.2003**
(21) Application number: 03250315.3
(22) Date of filing: 17.01.2003
(51) Int. Cl.: G01C 21/34

(54) **Navigation system**

(30) Priority: 18.01.2002 GB 0201148
(71) Applicant: Yeoman Group Plc, Lymington, Hampshire SO41 9YL (GB)
(72) Inventor: Walker, Gregory George, Yeoman Group plc, Lymington, Hampshire SO41 9YL (GB); Hancock, Simon, c/o Yeoman Group plc, Lymington, Hampshire SO41 9YL (GB); Geake, Vincent, c/o Yeoman Group plc, Lymington, Hampshire SO41 9YL (GB)
(74) Representative: Beresford, Keith Denis Lewis

(57) **Abstract**

A navigation guidance system is provided which gives direction information from a remote server to a mobile user unit for guiding the user from their current location. The user unit may be a mobile telephone, PDA or the like. A navigation query is transmitted from the user to the remote server. A GPS receiver or the like is provided so that the current location of the mobile unit can also be determined and provided to the remote server. Based on the information received from the user, the server determines appropriate route guidance information and sends this back to the user. In a preferred form of the invention, the data is transmitted between the user unit and the remote server using DTMF tones which are encoded so that no two consecutive tones are identical.

## Description

The present invention relates to a system and method for providing navigation assistance to a user for guiding the user from a source location to a desired destination. The invention is particularly, although not exclusively relevant to a system for providing navigation instructions to a user via a mobile unit, such as a telephone, from a remote server.

Systems have been proposed which provide geographical or position dependent information to a mobile user. Two main types of systems have been proposed to date. These include autonomous systems in which a user computer unit includes a geographic database which it accesses to determine the required geographic or position dependent information; and systems which employ a remote computer server to determine the appropriate information which is then transmitted to the user via for example a mobile telephone. The main disadvantage of the autonomous system is that the geographic database used to provide the geographic information is stored in the user's computer device and will soon become out-of-date as changes occur to the geographic landscape. This database must therefore be updated on a regular basis which is inconvenient for the user and costly for the service providers. The applicant's earlier International Application WO01/88480 describes the latter type of system which uses a remote server to overcome the problems associated with these autonomous type systems.

This application describes a number of improvements made to the system described in the above International application. Whilst many of these improvements relate specifically to this type of navigation system, many of the improvements are applicable in other fields of use.

Exemplary embodiments of the present invention will now be described with reference to the accompanying drawings, in which:
Figure 1 is a schematic diagram illustrating a navigation system embodying the present invention;
Figure 2 is a partial cut-away view illustrating an interior of a motor vehicle illustrated in Figure 1, showing a mobile telephone which is supported in a mounting bracket fixed to the motor vehicle;
Figure 3 is a block diagram illustrating the connection between a navigation control unit, an in-car entertainment unit, a mobile telephone and a hands-free kit mounted within the vehicle shown in Figure 2;
Figure 4A is a block diagram illustrating the main components of the navigation control unit shown in Figure 3;
Figure 4B is a block diagram illustrating the main components of a control processor forming part of the navigation control unit shown in Figure 4A;
Figure 5A illustrates the form of GPS data generated by a GPS receiver forming part of the navigation control unit shown in Figure 3;
Figure 5B illustrates the form of a full fix message generated by the control processor shown in Figure 4B from the GPS data shown in Figure 5A;
Figure 5C shows a mapped version of the message shown in Figure 5B generated by a transmission mapping unit forming part of the navigation control unit shown in Figure 4A;
Figure 5D illustrates the form of an encoded message generated by a delta encoder forming part of the navigation control unit shown in Figure 4A;
Figure 6 is a block diagram showing the main components of a navigation control centre forming part of the navigation system shown in Figure 1; and
Figure 7 is a block diagram illustrating the main components of a direct digital interface unit forming part of the navigation control centre shown in Figure 6.

### OVERVIEW

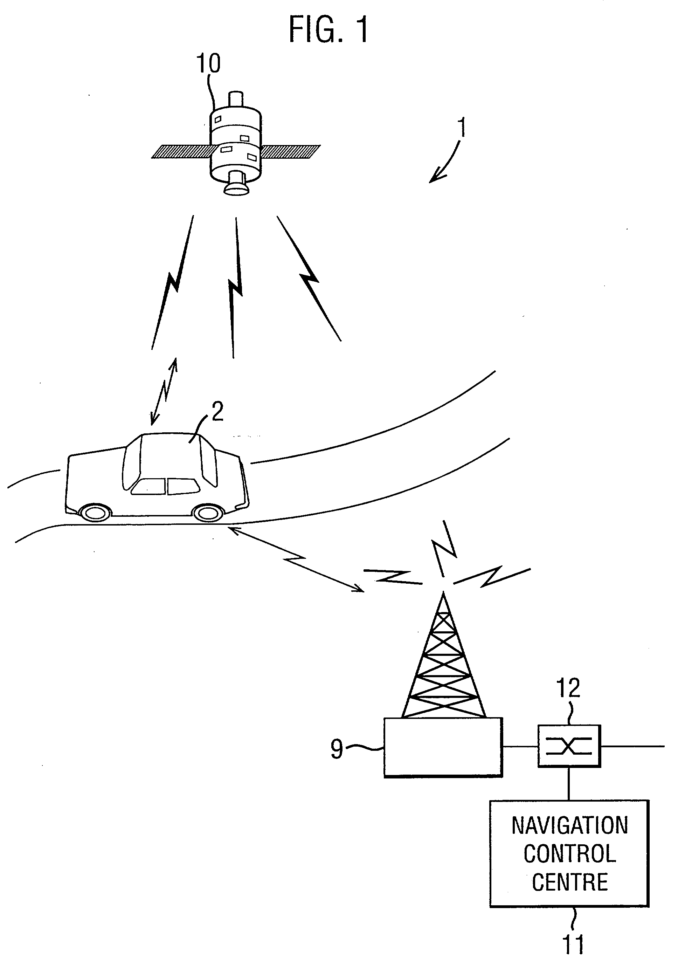

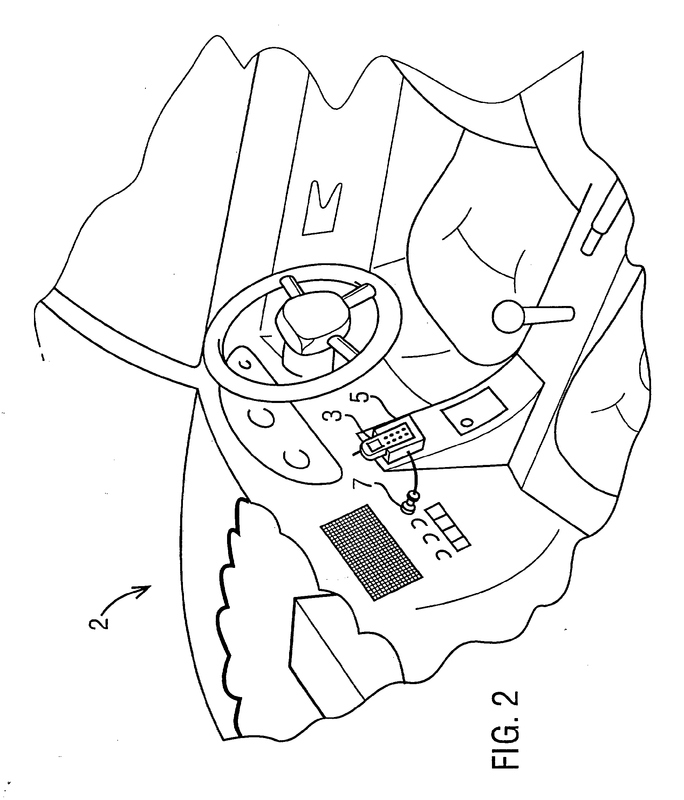

Figure 1 is a schematic representation of a navigation system 1 for providing a user within a motor vehicle 2 with navigation information for guiding the user to a desired destination. The navigation information is provided to the user by a navigation control centre 11 in response to a spoken request made by the user. In this embodiment, both the request and the subsequently determined navigation information are transmitted between the user and the navigation control centre via the user's mobile telephone 3 (shown in Figure 2 mounted in a hands-free kit 5 and powered from the cigarette lighter socket 7), the mobile base station 9 and the telephone switching network 12. The navigation control centre 11 maintains time-related models for actual traffic speeds expected on each section of roads in a road database (not shown). This allows the navigation control centre 11 to be able to provide the user with relatively accurate route guidance information to the desired destination, even during rush hour or at off-peak times. These models also allow the system to be able to calculate more accurately the time that the user will have to set off from a starting location to arrive at the destination at a required arrival time.

In this embodiment, the user's vehicle also includes a GPS receiver for receiving position, speed and course over the ground (COG) information which it determines from signals received from overhead satellites 10. This information is also transmitted to the navigation control centre 11 through the telephone link, so that the navigation control centre 11 can track the user's location over the determined route and provide the user with updated route guidance information as appropriate.

The navigation control centre 11 can receive navigation queries from a number of different users having mobile telephones 3 (or similar communication devices) and can then provide the appropriate navigation instructions back to the respective user. The types of queries that the navigation control centre 11 can respond to in this embodiment include:
i) Where am I?
ii) Where is the nearest service station, restaurant etc?
iii) How do I get to Lymington, Oxford, the nearest service station etc?
iv) What is the shortest route, quickest route or the most scenic route to get to town X from my current location?
v) If I wish to arrive at town X at time T, at what time should I start from town Y?

In this embodiment, the navigation information transmitted back from the navigation control centre 11 to the mobile telephone 3 includes synthesised voice instructions which are output to the user through the speaker of the hands-free kit 5.

The above description gives an overview of the vehicle navigation system described in the applicant's earlier International Application WO01/88480, the contents of which are incorporated herein by reference. A description will now be given of various improvements made to the system described above. These improvements mainly relate to the way in which the information from, for example, the GPS receiver is transmitted from the vehicle 2 to the navigation control centre 11. To illustrate these improvements, a more detailed description will now be given of the navigation control system provided in the vehicle 2 together with the other electronic components to be found in the vehicle 2.

### VEHICLE NAVIGATION CONTROL SYSTEM

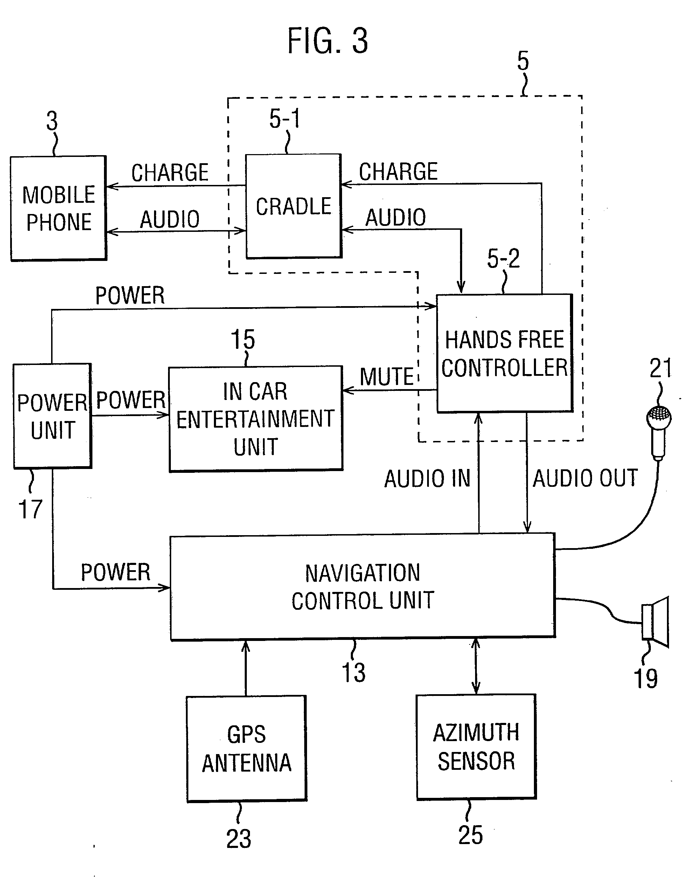

Figure 3 is a schematic block diagram illustrating the connection between a navigation control unit 13, an in-car entertainment unit 15, a mobile telephone 3 and the hands-free kit 5 (formed from the cradle 5-1 and the hands-free controller 5-2), which are all mounted within the vehicle 2. As shown in Figure 3, the hands-free kit 5, the in-car entertainment unit 15 and the navigation control unit 13 all receive power from the power unit 17 (which will ultimately be the vehicle's battery). The hands-free kit 5 is a conventional hands-free kit and the navigation control unit 13 is connected between the hands-free kit 5 and the speaker 19 and microphone 21 used by the hands-free kit 5. Audio signals received from the mobile telephone 3 are passed through the cradle 5-1 and the hands-free controller 5-2 and output on the audio output line (AUDIO OUT). In normal use, these audio signals are connected through the navigation control unit 13 to the loudspeaker 19 where the audio signals are output to the user. Similarly, audio signals received from the user via the microphone 21 are usually passed through the navigation control unit 13 to the hands-free controller 5-2 on the audio input line (AUDIO IN). These audio signals are then passed to the mobile telephone 3 via the cradle 5-1 and are then transmitted to the base station 9 in the normal way. As shown in Figure 3, the hands-free controller 5-2 can mute the in-car entertainment unit 15 during a call being made by the user, so that audio signals being generated by the in-car entertainment unit do not interfere with the call in progress. The hands-free kit 5 can also provide a power signal (CHARGE) to the mobile telephone 3 for charging mobile telephone's battery (not shown).

As shown in Figure 3, the navigation control unit 13 is connected to a GPS antenna 23 which supplies GPS signals received from the overhead satellites 10 to a GPS receiver (not shown) within the navigation control unit 13. This internal GPS receiver processes the received GPS signals to provide, among other things, position data, speed over the ground data and course over the ground data which are constantly updated (every second or so) while the GPS antenna 23 has direct communication with a sufficient number of GPS satellites 10. The navigation control unit 13 is also connected to an azimuth sensor 25 which, in this embodiment, is fixed relative to the vehicle 2 and which provides an indication of the current orientation of the vehicle 2 relative to some reference bearing, such as Magnetic North. This orientation information is also passed to the navigation control unit 13 which stores the information for transmission to the remote navigation control centre 11. Calibration of the azimuth sensor 25 can be made using the GPS course over the ground data determined by the internal GPS receiver.

In this embodiment, the stored GPS data and orientation data are then encoded into a sequence of DTMF audio tones which are output to the mobile telephone 3 on the AUDIO IN line via the hands-free kit 5, for onward transmission to the remote navigation control centre 11. In this embodiment, the GPS data and orientation data is transmitted to the remote navigation control centre 11 either automatically or when prompted to do so by the remote navigation control centre 11. In this embodiment, the prompts from the remote navigation control centre 11 are also encoded and transmitted over the telephone network to the mobile telephone 3 as DTMF tones, which are received by the navigation control unit 13 on the AUDIO OUT line from the hands-free kit 5. In this embodiment, during the transmission of DTMF tones between the navigation control unit 13 and the remote navigation control centre 11, the navigation control unit 13 is arranged to disconnect the connection between the hands-free kit 5 and the microphone 21 and speaker 19, so that the user does not hear the DTMF tones being transmitted and so that audio signals from within the car do not interfere with the DTMF signals.

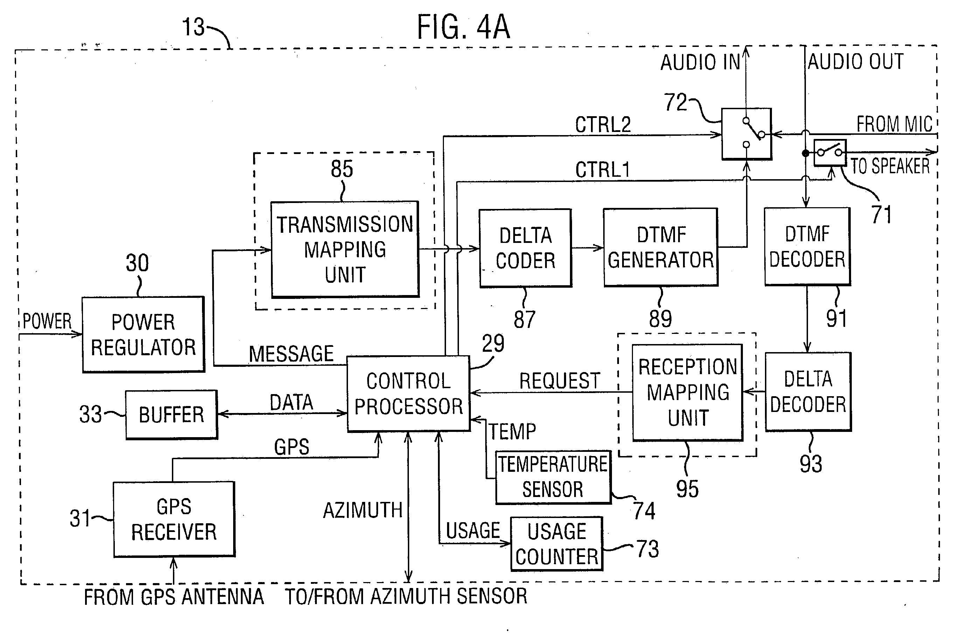

Figure 4A is a block diagram illustrating the main components of the navigation control unit 13 used in this embodiment. At the heart of the navigation control unit 13 there is a control processor 29 which receives requests and commands from the remote navigation control centre 11 and which controls the transmission of data messages back to the navigation control centre 11. The components of the navigation control unit 13 are powered from a regulated DC supply provided by the Power Regulator 30, which in turn is powered by the vehicles' power unit 17.

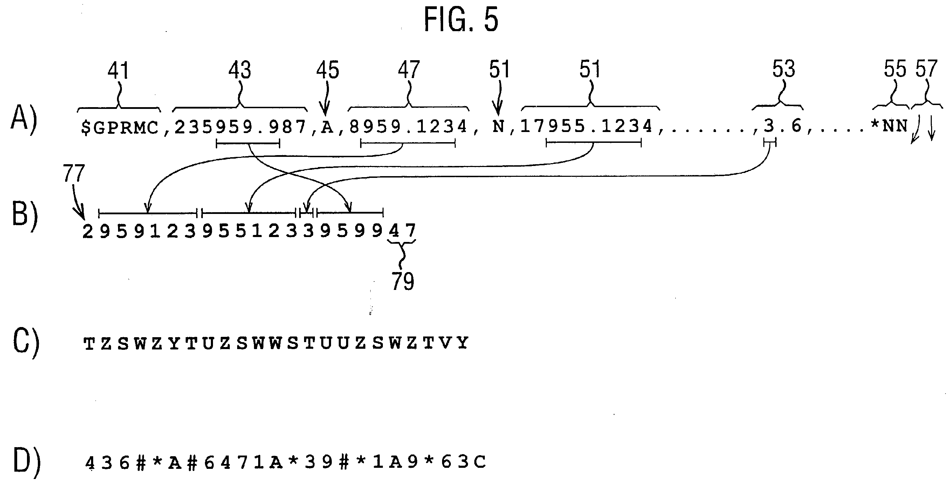

Figure 4A also shows the internal GPS receiver 31 which receives the GPS signals from the GPS antenna 23, from which it determines the above mentioned GPS data. This GPS data is then passed to the control processor 29 which in turn stores the data in the buffer 33. Figure 5A illustrates the main part of the GPS data that is generated by the GPS receiver 31 in this embodiment. As shown, the GPS data includes a header portion 41 which is a message identifier followed by a nine digit UTC time 43 for the latest position fix. The first two digits of the UTC time data represent the tens and units of hours; the next two digits represent the tens and units of minutes of the current hour; the next two digits represent the tens and units of seconds of the current minute; and the last three digits represent tenths, hundreds and thousands of a second respectively. These digits are followed by a control character 45 used to identify if the position fix is valid or invalid (valid is represented by the character A and invalid is represented by the character V). An eight digit latitude value 47 is then provided followed by an indication 49 as to whether or not the latitude is measured North or South of the equator. In the data shown in Figure 5A, the indicator 49 identifies that the latitude value is North of the equator. After the North/South indicator 49, a nine digit longitude value 51 is provided. The longitude value 51 is then followed by other GPS data (not shown) including speed over the ground data, an East/West indicator, course over the ground data and the date of the fix. This GPS data is then followed by a two digit value 53 which represents the Horizontal Dilution of Position (HDOP) generated by the GPS receiver. This HDOP measure 53 is always present in the GPS signal but is only meaningful if latitude and longitude are valid. The lower the value of the HDOP measure 53 the more accurate is the position fix from the GPS satellites. The HDOP measure 53 is then followed by further GPS data and then by a checksum 55 and a terminator sequence 57. As mentioned above, this GPS data (which is continuously updated) is written into the buffer 33 via the control processor 29.

The control processor 29 is also connected to the azimuth sensor 25 and receives the above-mentioned orientation data which it also stores in the buffer 33. From time to time, the control processor 29 re-calibrates the azimuth sensor 25 using course over the ground GPS data that it receives from the GPS receiver 31. The control processor 29 is also connected to a usage counter 73 which is used to maintain an indication of the number of times the navigation system is used by the user; and a temperature sensor 74 used to provide an indication of the temperature within the navigation control unit 13.

In this embodiment, the control processor 29 has two modes of transmitting data messages to the remote navigation control centre 11: (i) a streaming mode in which selected data messages are continuously updated and transmitted to the remote navigation control centre 11; and (ii) an on-demand mode in which a requested data message is transmitted to the remote navigation control centre 11 in response to a specific request for that data message from the remote navigation control centre 11.

The main types of data messages which can be transmitted in this embodiment from the navigation control unit 13 to the remote navigation control centre 11 will now be described.

### Navigation Control Unit - Transmittable Messages

In this embodiment, each data message transmitted from the navigation control unit 13 is preceded with a message identifier which is a one or two digit number identifying what data is being sent and the format of the data. The remote navigation control centre 11 uses this identifier to interpret the message. After the identifier the data is transmitted, without field identifiers and without field separators (in order to reduce the amount of data to be transmitted). At the end of the data a terminating character (in this embodiment the character "C") is transmitted which is the same for all messages transmitted from the navigation control unit 13 to the remote navigation control centre 11. The main types of messages that the navigation control unit 13 can transmit to the remote navigation control centre 11 include:

### (1) Coarse Fix Message

### 1<HiLat><HiLon><Hi UTC Time>SSC

where:-
- 1: is the message identifier.
- <HiLat>: are the high order digits of the GPS (WGS 84) latitude presented as a sequence of four numeric digits. 1234 represents a latitude of 23° 40' South of the equator. The first digit may be zero, to indicate North of the equator, or one to indicate South of the equator. The value 9999 is sent by the navigation control unit 13 if the latitude is not known or if it is not known if the latitude is North or South. The value 8888 is sent if validation (discussed below) has lapsed.
- <HiLon>: are the High order digits of the GPS (WGS 84) longitude presented as a sequence of four numeric digits. 1234 represents a longitude of 123° 40' East of Greenwich. The maximum valid value would be 3595 - indicating 10' West of Greenwich. The value 9999 is sent if longitude is not known. The value 8888 is sent if validation has lapsed.
- <Hi UTC Time>: is a sequence of four numeric digits specifying a portion of the UTC time and date of fix, e.g. if the last GPS fix was reported on 29^{th} October at 23:59:29 the four digit sequence reported in this field would be 9235. That is units of days (not tens of days), tens and units of hours and tens of minutes. The value of 9999 is sent if the time is not known. The value 8888 is sent if validation has lapsed.
- SS: is a two digit checksum accumulated from the start of the message up to, but excluding this checksum sequence. The particular checksum used in this embodiment will be described later.
- C: is the fixed termination character.

Note that in reporting the Coarse Fix, the value which is closest is reported, the Latitude or Longitude should not be truncated. For example, a latitude of 51° 45.001'N should be reported as 0515, not 0514.

### (2) Full Fix Message

### 2<Latitude><Longitude><HDOP><UTC Time>SSC

where:-
- 2: is the message identifier.
- <Latitude>: is the GPS (WGS 84) latitude presented as a sequence of six numeric digits. 123456 represents a latitude of X1° 23.456' North or South of the equator. The digit "X" represents any value. The Coarse Fix Message (discussed above) is used to quantify the tens of degrees of latitude and whether the receiver is in the Northern or Southern hemisphere. The fixed value 999999 is sent if latitude is not known. Note that since the number of minutes can only be in the range 00 to 59, the value 999999 would never appear as a valid latitude measurement. The value 888888 is sent if validation has lapsed.
- <Longitude>: is the GPS (WGS 84) longitude presented as a sequence of six numeric digits. 123456 represents a longitude of XX1°23.456' East of Greenwich. The digits "XX" represent any value. The Coarse Fix Message (discussed above) is used to quantify hundreds and tens of degrees of longitude. Exactly two degrees West of Greenwich would be represented by the digit sequence 800000 - that is 358° East of Greenwich, with the 3 and 5 not being transmitted. The fixed value 999999 is sent if longitude is not known. Note that since the number of minutes can only be in the range 00 to 59, the value 999999 would never appear as a valid longitude measurement. The value 888888 is sent if validation has lapsed.
- <HDOP>: is the integer part of the Horizontal Dilution of Position (HDOP) GPS measurement. This is always present, but is only meaningful if latitude and longitude are valid. Any value greater than 9 will be reported as 9.
- <UTC Time>: is a sequence of four numeric digits specifying units of minutes and tens, units and tenths of seconds of the UTC time of position fix, e.g. the value 9599 specifies 9 minutes, 59.9 seconds of UTC time. The Coarse Fix Message (discussed above) is used to determine the tens of minutes and hours. The value 8888 is sent if validation has lapsed.
Checksum and termination character as above.

### (3) Short Fix Message

### 3<Latitude><Longitude><HDOP><UTC Time>SSC

where:-
- 3: is the message identifier.
- <Latitude>: is the GPS (WGS 84) latitude presented as a sequence of between one and six numeric digits. If only one digit is presented it indicates that the new fix is within 5/1000 minute (about 10 metres) of the previous Full Fix or Short Fix (whichever was later), and the one digit number specifies the thousandths of a minute of the new fix. The remote navigation control centre 11 will need to calculate whether or not to modify the more significant digits of the previous position fix to calculate the position of the new fix such that it is within 5/1000 minute (about 10 metres) of the previous fix. In this embodiment, if a single digit report is exactly five different from the previous fix, then this is taken to imply that the more significant digits have not changed. For instance, if consecutive fixes are 51° 12.321' and 51° 12.316', the difference is only 5/1000 minute, but in this case this must be reported as a two digit short value of "16". However, if the new fix was 51° 12.326' then this can be reported with the single digit value of "6". If two digits are presented it indicates that the new fix is within 5/100 minute (about 100 metres) of the previous fix, and the two digit number specifies hundredths and thousandths of a minute of the new fix. Again, a difference of exactly 50 implies that the higher significance digits of the previous fix remain unchanged. The same principles apply for progressively more digits up to the maximum possible of six. Note that an invalid reply is only to be expected if there has never been a valid previous fix, since the navigation control unit 13 is arranged to report the latest valid fix, even if it hasn't had another fix since the previous request. If there is no valid fix to report, the five digit field 99999 is sent. This is the shortest field assembled from numeric digits which cannot represent a true geographical latitude, since that would amount to 99.999 minutes, and there are only 60 minutes in a degree. The value 88888 is sent if validation has lapsed.
- <Longitude>: is the GPS (WGS 84) longitude presented as a sequence of between one and six numeric digits. The same conventions used for the latitude field apply to this longitude field.
Note that in this message, since no field spaces are used to identify the boundaries between the different fields of the message, the latitude and longitude fields must be the same length. In this way, the remote navigation control centre 11 can identify the HDOP section, the UTC time section to leave the remaining bits, half of which must be latitude and the other half longitude. If different field lengths were used then it would not be possible to identify which bits represent latitude and which bits represent longitude.
- <HDOP>: as before - integer part of the GPS Horizontal Dilution of Position measure.
- <UTC Time>: is a single numeric digit specifying the whole seconds portion of the current UTC time of fix, e.g. if the position fix was measured at UTC 12:34:56.7 this message would only report the "6" digit. This is because the GPS receiver typically reports once every second. The full fix details the tenths of a second, which can be assumed to remain constant.
Checksum and termination character as above.

### (4) Short Fix Message - Relative to Last Full Fix

### 4<Latitude><Longitude><HDOP><UTC Time>SSC

This message is structured exactly like the Short Fix Message discussed above, except for the first digit message identifier. However, the new fix is compared with the last reported Full Fix (not the last Full Fix or Short Fix, whichever is later as was the case with the Short Fix).

### (5) COG & HDG Message

### 5<COG><HDG><UTC Time>SSC

where:-
- 5: is the message identifier.
- <COG>: is a two digit number which represents course over the ground (COG), East of true North. The value zero represents true North, each increment represents an additional 3.75 degrees. Hence the maximum valid value is 95. The value 99 is sent if COG is not known.
- <HDG>: is a two digit number which represents the current orientation of the vehicle (from the Azimuth sensor 25) in a similar format to COG. However, zero point is whatever the Azimuth sensor's zero point is - which may not be magnetic North or true North. The remote navigation control centre 11 uses this heading data to correlate this with previous COG for the times that COG is not meaningful.
- <UTC Time>: is a single numeric digit specifying the whole seconds portion of the current UTC time of fix, e.g. if the position fix was measured at UTC 12:34:56.7 this message would only report the "6" digit.
Checksum and termination character as above.

### (6) Short Fix plus Minutes Message

### 60<Short Fix><Postamble>SSC Relative to any previous fix or

### 61<Short Fix><Postamble>SSC Relative to previous full fix

where:-
- 60,61: are the message identifiers.
- <Short Fix>: as Short Fix Message fields <Latitude> <Longitude> <HDOP> <UTC Time>.
- <Postamble>: is a fixed two digit field which represents the minutes of the latest position fix time.
Checksum and termination character as above.

### (7) Short Fix plus Hours Message

### 62<Short Fix><Postamble>SSC Relative to any previous fix or

### 63<Short Fix><Postamble>SSC Relative to previous full fix

where:-
- 62,63: are the message identifiers.
- <Short Fix>: as Short Fix Message fields <Latitude> <Longitude> <HDOP> <UTC Time>.
- <Postamble>: is a fixed two digit field which represents the hours of the latest position fix time - UTC. Note that this is unlikely to be the same as local time, except in the UK during winter.
Checksum and termination character as above.

### (8) Short Fix plus Tens of Minutes Message

### 64<Short Fix><Postamble>SSC Relative to any previous fix or

### 65<Short Fix><postamble>SSC Relative to previous full fix

where:-
- 64,65: are the message identifiers.
- <Short Fix>: as Short Fix Message fields <Latitude> <Longitude> <HDOP> <UTC Time>.
- <Postamble>: is a fixed two digit field with the first digit representing tens of minutes of latitude, and the second digit representing tens of minutes of longitude.
Checksum and termination character as above.

### (9) Short Fix plus Units Message

### 66<Short Fix><Postamble>SSC Relative to any previous fix or

### 67<Short Fix><Postamble>SSC Relative to previous full fix

where:-
- 66,67: are the message identifiers.
- <Short Fix>: as Short Fix Message fields <Latitude><Longitude><HDOP><UTC Time>.
- <Postamble>: is a fixed two digit field with the first digit representing units of degrees of latitude, and the second digit representing units of degrees of longitude.
Checksum and termination character as above.

### (10) Short Fix plus Tens Message

### 70<Short Fix><Postamble>SSC Relative to any previous fix or

### 71<Short Fix><Postamble>SSC Relative to previous full fix

where:-
- 70,71: are the message identifiers.
- <Short Fix>: as Short Fix Message fields <Latitude> <Longitude> <HDOP> <UTC Time>.
- <Postamble>: is a fixed two digit field with the First digit representing tens of degrees of Latitude and the second digit representing tens of degrees of longitude.
Checksum and termination character as above.

### (11) Short Fix plus Hundreds Message

### 72<Short Fix><Postamble>SSC Relative to any previous fix or

### 73<Short Fix><Postamble>SSC Relative to previous full fix

where:-
- 72,73: are the message identifiers.
- <Short Fix>: as Short Fix Message fields <Latitude> <Longitude> <HDOP> <UTC Time>.
- <Postamble>: is a fixed two digit field with the first digit being zero to indicate North of the equator and one to indicate south of the equator, and the second digit representing hundreds of degrees of longitude, in the range 0 to 3.
Checksum and termination character as above.

### (12) Stream Plan Message

### 90<Stream Plan>SSC

where:-
- 90: is the message identifier.
- <Stream Plan>: is a sequence of numeric digits which uses the message identifiers to specify the sequence of messages to be sent when the navigation control unit 13 is in its streaming mode of operation. For example, the sequence '05606264667072' specifies a sequence of COG and HDG, short fix + minutes, short fix + hours, short fix + tens of minutes, short fix + units, short fix + tens, short fix + hundreds. This is the default stream used in this embodiment. Note that single digit message identifiers are expanded to two digits by zero filling to the left.
Checksum and termination character as above.

### (13) Box Temperature Message

### 82<Temperature>SSC

where:-
- 82: is the message identifier.
- <Temperature>: is a sequence of numeric digits identifying the temperature inside the navigation control unit 13. This is nominally in degrees centigrade.
Checksum and termination character as above.

### (14) Usage Count Message

### 83<Usage Count>SSC

where:-
- 83: is the message identifier.
- <Usage Count>: is a sequence of numeric digits identifying the number of times a validation key has been delivered to the navigation control unit 13. Wraps back to zero when incremented beyond 65535.
Checksum and termination character as above.

### Navigation Control Unit - Receivable Requests

As discussed above, the navigation control unit 13 either transmits messages to the remote navigation control centre 11 in response to specific requests or commands from the remote navigation control centre 11 or according to some predefined streaming sequence. The main commands that the navigation control unit 13 can receive from the remote navigation control centre 11 in this embodiment, are given in the following table.

**Table 1**

| **Item** | **Command** | **Code Digit Sequence** |
|---|---|---|
| 1 | Stop Streaming & Enable Speaker | 0 (not followed by D nor Delta Coded) |
| 2 | Stop Streaming & Enable Speaker | 2 (not followed by D nor Delta Coded) |
| 3 | Stop Streaming & Enable Speaker | 5 (not followed by D nor Delta Coded) |
| 4 | Stop Streaming & Enable Speaker | 8 (not followed by D nor Delta Coded) |
| 5 | Stop Streaming & Enable Speaker | 610D |
| 6 | Coarse Fix | 611D |
| 7 | Full Fix | 612D |
| 8 | Short Fix Relative to Latest | 613D |
| 9 | Short Fix Relative to Full | 614D |
| 10 | COG & HDG | 615D |
| 11 | Short Fix + Minutes, Latest | 6160D |
| 12 | Short Fix + Minutes, Full | 6161D |
| 13 | Short Fix + Hours, Latest | 6162D |
| 14 | Short Fix + Hours, Full | 6163D |
| 15 | Short Fix + 10's of Minutes, Latest | 6164D |
| 16 | Short Fix + 10's of Minutes, Full | 6165D |
| 17 | Short Fix + units of Degs, Latest | 6166D |
| 18 | Short Fix + units of Degs, Full | 6167D |
| 19 | Short Fix + 10's of Degs, Latest | 6170D |
| 20 | Short Fix + 10's of Degs, Full | 6171D |
| 21 | Short Fix + 100's of Degs, Latest | 6172D |
| 22 | Short Fix + 100's of Degs, Full | 6173D |
| 23 | Report Stream Plan | 6190D |
| 24 | Set Default Stream Plan | 6191D |
| 25 | Define Stream Plan | 6192NN..NNSSD |
| 26 | Start Streaming | 6193D |
| 27 | Stop Streaming | 6194D |
| 28 | Enable Speaker | 6180D |
| 29 | Mute Speaker | 6181D |
| 30 | Report Box Temperature | 6182D |
| 31 | Report Usage Count | 6183D |
| 32 | Request KEY | 6184D |
| 33 | Here Comes KEY | 6185D + KEY |

As shown in the above table, in this embodiment, all commands transmitted from the remote navigation control centre 11 to the navigation control unit 13 start with the preamble "61" and end with the terminating character "D". It was found that without this preamble problems were experienced with the control processor 29 interpreting human speech as the start of a DTMF request sequence. Selection of the sequence "61" was chosen since this produces (after encoding) DTMF bursts with totally different tones spaced as far apart as possible. It is therefore unlikely that this tone sequence will be generated by a normal human voice and cause the false triggering of the navigation control unit 13. In this embodiment, all of the commands received by the navigation control unit 13 are interpreted and responded to by the control processor 29.

### Navigation Control Unit - Control Processor

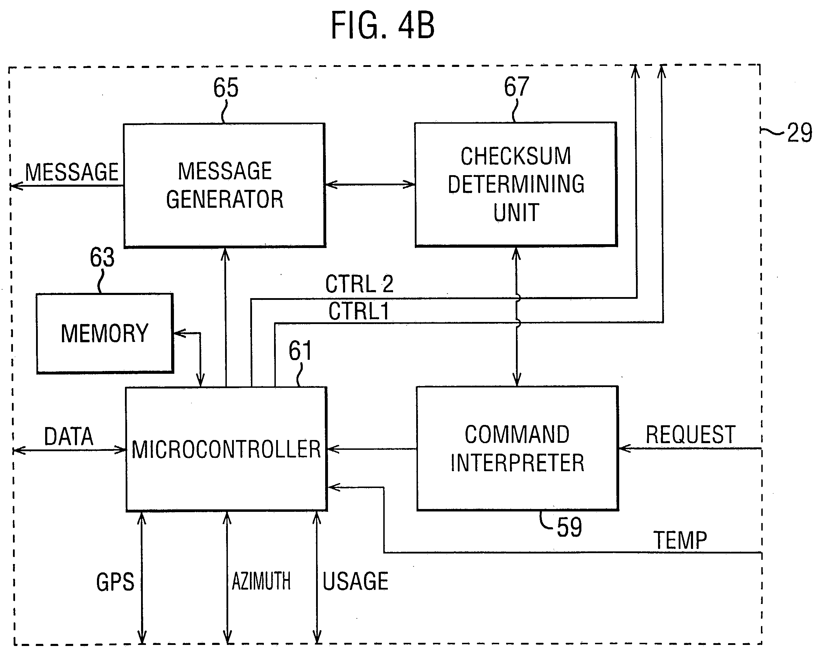

Figure 4B is a block diagram illustrating the components of the control processor 29. As shown, the control processor 29 includes a command interpreter 59 which receives the code digit sequence transmitted from the remote navigation control centre 11 and interprets it according to the above table to identify the command being made. More specifically, upon receipt of the preamble "61" of an incoming request, the command interpreter 59 informs the microcontroller 61 that it is receiving an incoming command. In response, the microcontroller 61 outputs an appropriate control signal (CTRL1) to open the switch 71 in order to mute the speaker 19. At the same time, the microcontroller 61 disconnects the microphone 21 from the hands-free kit 5 by outputting an appropriate control signal (CTRL2) to switch the positional switch 72. The microcontroller 61 then waits for up to one second to receive the interpreted command from the command interpreter 59. If the interpreted command is not received within that one second interval, then the microcontroller 61 "times out" and re-enables the speaker 19 by closing the switch 71 and re-connects the microphone 21 to the hands-free kit 5 by switching the position of the switch 72. Upon receiving the next part of the command, the command interpreter 59 determines what command is being made using the above table, and informs the microcontroller 61 accordingly.

The way in which the microcontroller 61 processes the new command depends upon its current mode of operation, i.e. whether or not it is in its on-demand mode of operation or its streaming mode of operation. If the microcontroller 61 is in its on-demand mode, then it retrieves the appropriate data to be transmitted (e.g. from the buffer 33, the azimuth sensor 25, the usage counter 73 etc.) which it passes to the message generator 65 which adds the appropriate message identifier and puts the data into the appropriate format as defined above. This message data is then passed to a checksum determining unit 67 which calculates an appropriate checksum for the message which it appends to the end of the message. The message is then passed back to the message generator 65 which outputs the message for encoding and transmission. If the microcontroller 61 is currently in its streaming mode of operation when it receives the new command, then it controls the message generator 65 to insert the requested message within the stream following the current message being transmitted, after which the microcontroller 61 continues streaming in accordance with the current streaming plan. In this embodiment, when the microcontroller 61 is in its streaming mode of operation, it waits 500 milliseconds after the end of transmitting one message, or for 1000 milliseconds after the start of the previous message, whichever is later, before instructing the message generator 65 to start outputting the next message for transmission. By ensuring that there is at least a 500 millisecond gap between transmitted messages, sufficient time is provided for the remote navigation control centre 11 to be able to transmit a command to the navigation control unit 13 and be sure that the navigation control unit 13 will be able to detect the transmitted command. Without these gaps between messages, there is a risk that once the navigation control unit 13 has started streaming, it might not be able to detect commands transmitted from the remote navigation control centre 11.

Figure 5B illustrates the form of the message generated by the message generator 65 for the GPS data shown in Figure 5A, when the message to be transmitted is a Full Fix message (message (2) above). As shown, the message identifier 77 is set at the value "2" to indicate to the remote navigation control centre 11 that the message is a Full Fix message. The next six digits in the message are extracted from the latitude data 47 of the latest GPS fix and the next six digits after that correspond to the extracted portion of the longitude data 51 of the latest GPS fix. The next digit in the sequence corresponds to the integer part of the HDOP data 53 of the latest GPS position fix, followed by the four digits corresponding to the minutes and seconds and tenths of seconds extracted from the UTC Time 43 of the latest GPS position fix. The final two numeric digits (shown in this case as the number "47") correspond to a checksum 79 which is determined by the checksum determining unit 67.

### Checksum Calculation

As mentioned above, messages generated by the message generator 65 include a checksum calculated by the checksum determining unit 67. In this embodiment, a two-digit checksum is used which can take a value of between "00" and "99". The way in which the checksum determining unit 67 determines the checksum will now be described.

An initial value of the checksum is set. In this embodiment, the initial value "41" is used, which is the same for all messages to be transmitted. When a digit of the message is to be accumulated to the checksum, first the current checksum value is doubled, with end-around carry. For example, if the current value of the checksum is 73, then doubling it makes 146; this means there is carry of 1, so 100 is subtracted from the value and 1 is added to the value, making 47. The next digit of the message to be added to the checksum is then obtained and the table below is used to map this DTMF digit to a value that is to be added, also with end-around carry, to the current checksum value.

**Table 2**

| | | | | | | | | | | |
|---|---|---|---|---|---|---|---|---|---|---|
| DTMF Digit | 0 | 1 | 2 | 3 | 4 | 5 | 6 | 7 | 8 | 9 |
| Mapped Value | 7 | 19 | 23 | 37 | 43 | 53 | 67 | 69 | 89 | 97 |

The way in which the checksum is calculated for part of the message shown in Figure 5B will now be described for illustration. As discussed above, the initial checksum value is "41". This value is doubled to give "82". The first digit of the message is the digit "2". This is mapped to the value "23" from table 2. "23" is therefore added to the value "82" giving "105"; since this is greater than "99", "100" is subtracted from this value and "1" is added to give "6". This value is then doubled to give "12" and the next DTMF digit in the message is the digit "9". This digit gets mapped to the value "97" using table 2, which is added to "12" to give "109" which, with end-around carry gives the value "10". Again, this value is doubled to give "20". The next digit in the message is the digit "5" which is mapped to the value "53" using the above table. "53" is therefore added to "20" to give "73". The above processing continues in this way until the mapped value for the last digit is added, with end-around carry, to the current checksum value. The result is used as the checksum value.

The reason for doubling the checksum value before adding in the mapped value for the next digit is that this causes the resulting checksum value to be dependent upon the order of the digits in the message. For example, if the checksum value is not doubled in this way, then the resulting checksum value that would be obtained for the digits "959" would be the same as the checksum value obtained for the digits "599". However, by doubling the checksum value before adding in the mapped value for the next digit, the resulting checksum will depend upon the order of the digits in the message to be transmitted.

The reason for using a mapped value to be added in to the checksum rather than using the DTMF digit value itself is that this allows the values to be added in to be more evenly spread over the checksum range "00" to "99". In particular, if the DTMF digit value had been added directly into the checksum then this would have resulted in some checksum values being more probable than other checksum values. Further, prime numbers have also been used for the mapped values again to try to ensure a uniform probability of each checksum value between "00" and "99" occurring.

### Stream Plan Messages

As shown in Table 1 above, not all of the receivable commands are requests for data; some of the commands are used to control the operation of the control processor 29, such as the start/stop streaming commands 26 and 27, the enable/mute speaker commands 28 and 29 or commands 24 or 25 used to reset the default stream plan and to define a new stream plan respectively. In this embodiment, the command to define a new stream plan does not allow a "null" stream plan. If this is attempted, the microcontroller 61 interprets this as being a request to transmit only short fix messages when in the streaming mode of operation. In this embodiment, a maximum of ten messages can make up a stream plan. Both the current stream plan and the default stream plan are stored in the memory 63.

If the received command is for defining a new stream plan, then the command interpreter 59 passes the received message to the checksum determining unit 67 to calculate the checksum for the received message. The calculated checksum is then passed back to the command interpreter 59 which compares it with the checksum appended to the end of the received message. If the checksums are the same, then the command interpreter 59 passes the new stream plan to the microcontroller 61 which it stores in the memory 63. If the checksums are not the same, then the command interpreter 59 assumes that an error has occurred in the transmission and it ignores the received stream plan.

### User Characters

In this embodiment, the DTMF characters 0, 2, 5 and 8 are reserved for user input via the keypad (not shown) of the mobile telephone 3. Therefore, in this embodiment, these characters are not used in the messages that are transmitted between the navigation control unit 13 and the remote navigation control centre 11. As will be described below, appropriate encoding is used to avoid the need to use these characters. In this embodiment, if the user presses any one of the keys corresponding to these characters on the keypad of the telephone 3, this will be detected by the microcontroller 61 which, as shown in the above table, aborts the message currently being transmitted and re-enables the speaker 19 (and the microphone 21). Additionally, any outstanding requests for individual (non-streamed) messages are also cancelled. The above also happens upon receiving the stop streaming and enable speaker command (610D) from the remote navigation control centre 11.

### Validation

In this embodiment, the microcontroller 61 will not allow the transmission of valid messages to the remote navigation control centre 11 unless it has been validated. In this embodiment, this validation is performed by the remote navigation control centre 11 transmitting a DTMF validation key (KEY) to the microcontroller 61. As shown in the above table, this key is preceded by the command "here comes KEY". Upon receipt of this command, the microcontroller 61 unmutes the speaker 19 (if it is currently muted) and then waits a predetermined period of time, for the arrival of the validation key. The speaker 19 is then muted again after the key is received, if it was muted immediately prior to receiving the "here comes KEY" command. Upon receipt of the key, the microcontroller 61 compares the received key with a pre-stored key (not shown) stored in the memory 63, to ensure that it is the same. If it is the same, then the microcontroller 61 increments the usage counter 73 and initialises itself to respond to future commands from the remote navigation control centre 11, for a predetermined time interval (in this embodiment two hours).

If during that two hour interval, the microcontroller 61 receives a position fix request from the remote navigation control centre 11, then it resets this validation time interval to its maximum again. If no commands are received within this two hour period, then the validation will lapse and the microcontroller 61 will transmit the values (888..) indicating that validation has lapsed, back to the remote navigation control centre 11 in response to any requests for data. This will be detected by the remote navigation control centre 11 which will then transmit the validation key again.

In this embodiment, the remote navigation control centre 11 can also request the navigation control unit 13 to transmit the validation key to it (see command 32 in Table 1 above). In this way, the remote navigation control centre 11 can ensure that the navigation control unit being used is an authorised navigation control unit.

### DTMF Data Transmission

As mentioned above, the messages transmitted between the navigation control unit 13 and the remote navigation control centre 11 are transmitted as DTMF audio tones via the mobile telephone 3. A significant constraint of using DTMF tones is that the data rate that it can deliver is relatively low compared to other data modulation schemes. The DTMF character set comprises sixteen possible characters:
1) the ten numeric digits 0 to 9;
2) the asterisk (*) character;
3) the hash (#) character; and
4) the first four alphabetic symbols A to D.

A typical mobile telephone handset is capable of generating the first twelve of these characters, but not the last four. As those skilled in the art will appreciate, under the DTMF scheme, each of the above sixteen characters is represented by two unique frequency tones that are output substantially simultaneously. These dual tones for each character are given below in the following table.

**Table 3**

| **Character** | **Low Band Hertz** | **High Band Hertz** |
|---|---|---|
| 0 | 941 | 1336 |
| 1 | 697 | 1209 |
| 2 | 697 | 1336 |
| 3 | 697 | 1477 |
| 4 | 770 | 1209 |
| 5 | 770 | 1336 |
| 6 | 770 | 1477 |
| 7 | 852 | 1209 |
| 8 | 852 | 1336 |
| 9 | 852 | 1477 |
| A | 697 | 1633 |
| B | 770 | 1633 |
| C | 852 | 1633 |
| D | 941 | 1633 |
| * | 941 | 1209 |
| # | 941 | 1477 |

### Message Encoding

As discussed above, the DTMF character "D" is reserved for identifying the end of messages transmitted from the remote navigation control centre 11 to the navigation control unit 13 and the DTMF character "C" is reserved for identifying the end of messages transmitted from the navigation control unit 13 to the remote navigation control centre 11. The use of different DTMF characters to identify the different originators of the messages is used in order to try to minimise the risk of an echo from a sender being interpreted as a command from the other end. However, the use of two different terminating characters effectively reduces the possible information transfer capacity using the DTMF tones. Further, as discussed above, in addition to these DTMF characters, the digits "0", "2", "5" and "8" are also reserved for user commands (which may be entered by the user via the keypad of the mobile telephone 3). This leaves just ten DTMF characters (1, 3, 4, 6, 7, 9, A, B, * and #) to transmit the messages between the navigation control unit 13 and the remote navigation control centre 11.

Conventionally, transmitted DTMF tones must be separated by gaps in order that the receiver can differentiate between one DTMF character and the next. In the present embodiment, however, the DTMF string is encoded so that no two consecutive DTMF characters are the same. By doing this, the period of silence or space between consecutive DTMF tone bursts can be made very short, or non-existent, thereby increasing the proportion of time that may be spent transmitting meaningful tones. This encoding technique has the additional advantage that whilst a short break in audio transmission between the mobile telephone 3 and the base station 9 (e.g. at call handover) might make one DTMF character appear as two DTMF characters at the receiver, those two characters would be identical and so the second character may be ignored by the receiver. This coding scheme therefore enhances the probability of accurate transfer of the intended message. It is of particular benefit to transfers from the navigation control unit 13 to the remote navigation control centre 11, since in this embodiment, the majority of data transferred is in this direction. As will be described in more detail below, this encoding is performed in the delta encoder 87.

One disadvantage with using a delta encoding technique is that the ten character set available for transmitting the messages reduces to nine meaningful characters, because the same character cannot be transmitted successively. In other words, the delta coder 87 can only encode nine different characters received at its input. However, the message generator 65 can generate ten different characters (zero to nine). Therefore, in this embodiment, a transmission mapping unit 85 is provided which performs a mapping between the messages output from the message generator 65 into a corresponding message using a character set having a repertoire of nine characters. In order to avoid confusion, the characters output by the transmission mapping unit will be labelled R to Z - the last nine characters of the alphabet. The mapping performed by the transmission mapping unit 85 in this embodiment is given below in Table 4.

**Table 4**

| **INPUT CHARACTER** | **OUTPUT CHARACTER** | **INPUT CHARACTER(S)** | **OUTPUT CHARACTER(S)** |
|---|---|---|---|
| 0 | R | 8 | ZR |
| 1 | S | 9 | ZS |
| 2 | T | 99 | ZT |
| 3 | U | 80 | ZU |
| 4 | V | 81 | ZV |
| 5 | W | 82 | ZW |
| 6 | X | 90 | ZX |
| 7 | Y | 91 | ZY |
| | | 92 | ZZ |

As shown in the table, some of the characters output from the message generator 65 get mapped to two characters output by the transmission mapping unit 85. In particular, the characters "8" and "9" output by the message generator 65 get mapped to the characters "ZR" and "ZS" respectively. Careful consideration was given to which of the characters output by the message generator 65 would be mapped to two characters output from the transmission mapping unit 85. The characters "8" and "9" were chosen because they are less likely to be output by the message generator 65. In particular, the information that is output from the message generator 65 expresses times and angles in decimal. Since there are sixty minutes per hour, sixty minutes per degree and sixty minutes per minute, the digits "0" to "5" are more popular than other digits. Further, a direction and longitude can be 0 to 360° and latitude uses a zero or a one to signify the northern or southern hemisphere - this increases the probability of "0", "1", "2" and "3". Therefore, it was decided that characters "8" and "9" were the least likely to be generated.

As those skilled in the art will appreciate, it is only essential to define a relationship between the characters "0" to "9" and "R" to "Y", "ZR" and "ZS" to achieve a complete mapping for the output from the message generator 65. However, since "ZT" to "ZZ" are available, these are used to encode more likely pairs of characters output from the interchange coder 78 which start with an "8" or a "9". As discussed above, the character code "99" is likely to occur when information is not known. Accordingly, "99" has been assigned to the characters "ZT". Remaining mappings for digit pairs "80", "81", "82", "90", "91" and "92" were chosen based on probability of occurrence.

The inventors have found that using the above transmission mapping table would, in the worst case, double the size of the message to be transmitted. However, if the message to be transmitted is formed entirely from the characters 0 to 7, then the transform will not change the message size at all.

Figure 5C illustrates the sequence of characters output by the transmission mapping unit 85 using the mapping table given above for the input message shown in Figure 5B. As shown, the twenty character message output from the message generator 65 is mapped to a twenty three character message by the transmission mapping unit 85.

As discussed above, in this embodiment, a delta coder 87 is used to encode the messages to be transmitted so that no two consecutive characters in the encoded sequence are the same. Further, as discussed above, the available characters that the delta coder 87 can output are: 1, 3, 4, 6, 7, 9, A, B, * and #. In this embodiment, the delta coder 87 performs the encoding using the following encoding table:

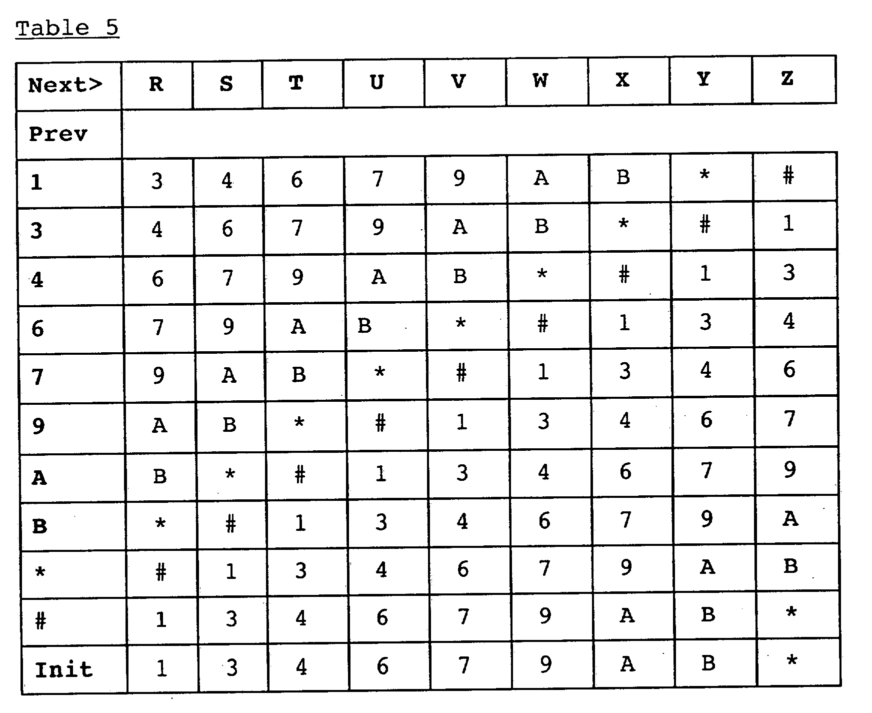

The way in which the delta coder 87 uses this table to generate the encoded message will now be described with reference to the example message shown in Figure 5C. Initially, the first character in the message to be transmitted is determined - in this case the character 'T'. The location of this character in the row marked 'next' is then found. The intersection of the column defined by the character 'T' in this row and the row marked 'Init' defines the first character to be output by the delta coder 87. In this example, therefore and as shown in Figure 5B, the first character is '4'. The next character received from the transmission mapping unit 85 is the character 'Z'. The column in the table defined by the character 'Z' is found (in this case the last column in the table) and the intersection of this column with the row defined by the previous ('prev') character transmitted is found. In this example, the previous character to be transmitted was the character '4' and therefore the intersection corresponds to the character '3' which, as shown in Figure 5D is the next character in the sequence to be transmitted. This procedure then continues until the end of the message, when the delta coder 87 appends the termination character 'C' to the end of the message.

The character sequence generated by the delta coder 87 (for example, like the one shown in Figure 5D) is then output to the DTMF generator 89 which generates DTMF tones in accordance with Table 2 above. In this embodiment, the DTMF generator 89 is arranged to generate the first tone of a message as a burst of 100ms of tone followed by a 6ms silence period. The remaining tones of the message are then transmitted as a burst of 50ms of the tone followed by a 6ms silence period. Therefore, in this embodiment, the navigation control unit 13 can transmit one character every 56ms, with a mark space ratio of 25:3. These tones pass through the switch 72 and the hands free kit 5 to the mobile telephone 3, where the DTMF tones get transmitted to the remote navigation control centre 11 via the base station 9 and the switching network 12.

### Message Decoding

In this embodiment, messages transmitted from the remote navigation control centre 11 are also transmitted using the same character set used by the navigation control unit 30 and using the same delta encoding technique. In this embodiment, there is a relatively small amount of data to be transmitted from the remote navigation control centre 11 to the navigation control unit 13 mounted with the user. Consequently, in this embodiment the sequence of DTMF tones generated and transmitted from the remote navigation control centre 11 have a longer duration and a longer silence period between the tones. In particular, in this embodiment, each of the DTMF tones has a duration of 100ms and is followed by a silence period of 50ms. In other words, the DTMF tones transmitted to the navigation control unit 13 have a mark space ratio of 2:1.

As shown in Figure 3, DTMF tones received at the mobile telephone 3 are passed via the hands free kit 5 to the navigation control unit 13 on the AUDIO OUT line. As shown in Figure 4A, these tones are passed to a DTMF decoder 91 which recovers the DTMF characters corresponding to the transmitted tones (such as the characters shown in Figure 5D). These characters are then passed to a delta decoder 93 which performs the reverse encoding that was performed by the delta coder 87. In this embodiment, this decoding is performed by the delta decoder 93 using the following table:

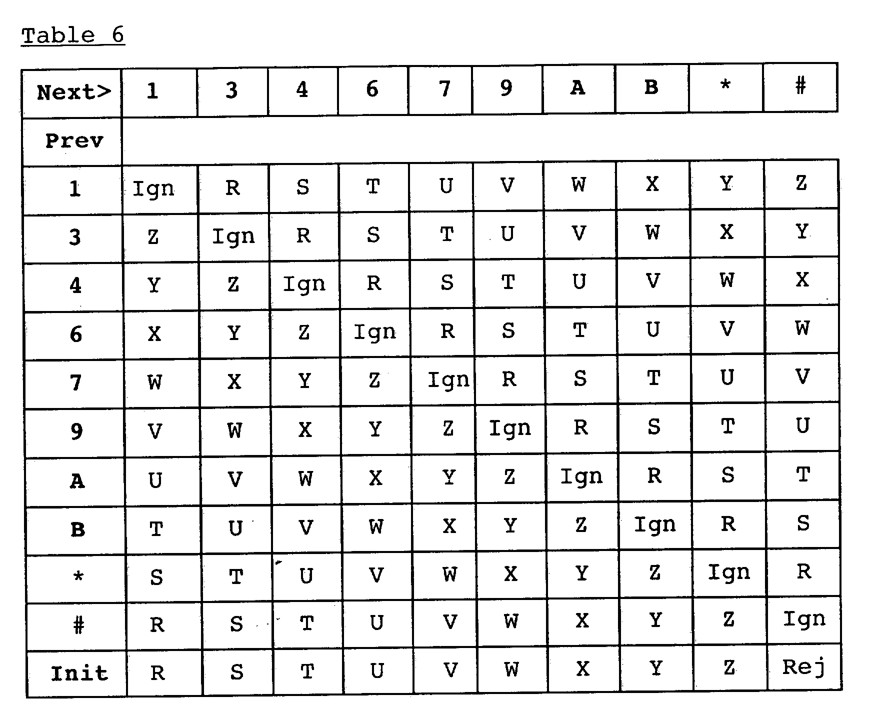

To start the decoding, the first character in the message is found in the top row marked 'next' of the decode table. The intersection of the column defined by this character and the row marked 'Init' is found and this character is the first character of the decoded message. For the example shown in Figure 5D, the first character to be decoded is the character '4'. As shown in the above decode table, the intersection of the column defined by the character '4' and the row marked 'Init' is the character 'T'. This is the first character of the decoded message, which corresponds to the first character shown in Figure 5C. The next received character is then found in the top row of the decode table and the intersection of the column defined by that character with the row defined by the previously ('prev') received character is found. This intersection defines the next character of the decoded message. For the message shown in Figure 5D, the second character received is the character '3' and the intersection of the column defined by this character and the row defined by the previous character received ('4') is the letter 'Z', which again corresponds to the second character shown in Figure 5C. The above procedure repeats until the termination character (in this embodiment the 'D') used for transmission from the remote navigation control centre 11 to the navigation control unit 13 is detected, at which point the delta decoder 93 resets itself to receive the next message. The delta decoder 93 also resets itself if it receives any of the digits 0, 2, 5 or 8 which, as described above, are reserved for use by the user via the keypad of the mobile telephone 3.

As shown in the above decoding table, if consecutively received digits are the same then the delta decoder 93 ignores them (indicated by 'IGN' in the table). Further, if the initial character of the message is the # symbol, then the delta decoder 93 rejects ('Rej') the entire message until it receives the next control character (0, 2, 5, 8 or D). This is because, in this embodiment the encode table used by the delta coder 87 cannot output the # symbol as the initial character.

As shown in Figure 4A, the decoded message output from the delta decoder 93 is input to a reception mapping unit 95 which performs the inverse mapping performed by the transmission mapping unit 85 discussed above. In particular, the reception mapping unit 95 uses the same mapping table (Table 3) given above except in reverse. The characters output from the reception mapping unit 95 are then input to the control processor 29 which processes the received command in the manner discussed above.

### NAVIGATION CONTROL CENTRE

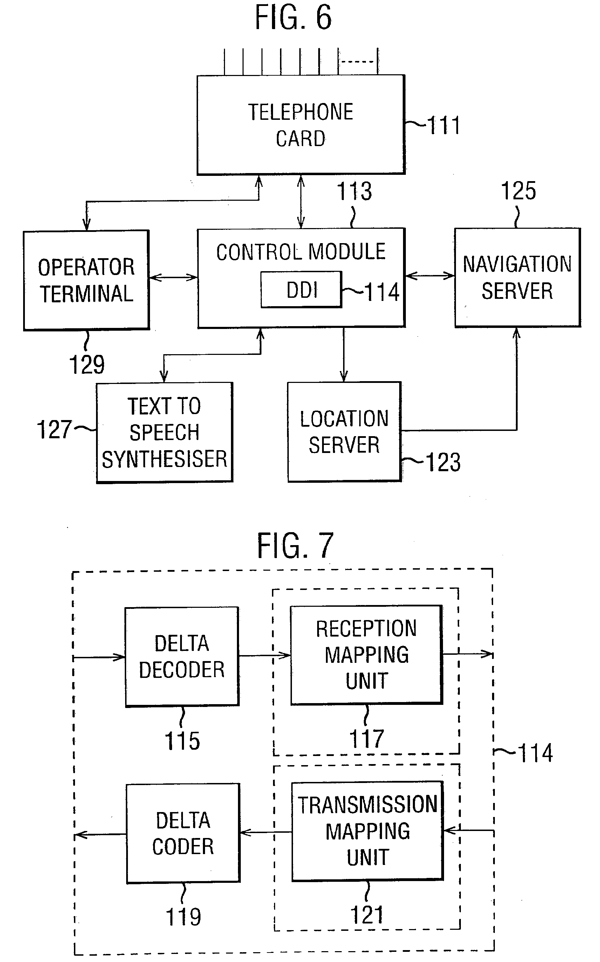

As discussed above, the purpose of the navigation control centre 11 is to receive navigation requests from users, to request position, speed, heading information etc from the navigation control unit 13 mounted with the user, to determine appropriate navigation instructions and to provide those instructions to the user via the mobile telephone 3. Figure 6 is a block diagram illustrating the main components of the navigation control centre 11 used in this embodiment. As shown, the navigation control centre 11 includes a telephone card 111 which provides the physical interface between the navigation control centre 11 and the telephone exchange 12. In this embodiment, the telephone card 111 includes the DTMF generator and DTMF decoder (not shown) used for generating and decoding respectively the DTMF tones transmitted between the navigation control centre 11 and the navigation control unit 13.

As shown in Figure 6, a control module 113 is connected to the telephone card 111 and performs the necessary control operation of the navigation control centre 11. Forming part of the control module 113 is a digital data interchange (DDI) 114 which performs the same encoding and decoding functions performed in the navigation control unit 13 described above. In particular, Figure 7 shows the form of the digital data interchange 114 used in this embodiment. As shown, it includes a delta decoder 115, a reception mapping unit 117, a delta coder 119 and a transmission mapping unit 121, which all perform the same functions as the corresponding units in the navigation control unit 13 described above. Therefore, in this embodiment, the control module 113 generates the appropriate command (and checksum if a new stream plan is to be defined) which it encodes using the DDI 114. The encoded command is then output to the DTMF generator (not shown) in the telephone card 111. Similarly, messages received from the navigation control unit 13 are decoded using the DDI 114 and then passed to the control module 113 for checksum checking (using the same checksum calculation technique described above) and for interpretation.

An operator terminal 129 (including a telephone handset together with a keyboard/mouse and display assembly (not shown)) is also connected to the telephone card 111 via which a human operator (not shown) can speak with the user of the mobile telephone 3 at the start of a navigation request. In particular, when an incoming call is received, it is initially routed to the control module 113 which uses caller line identification techniques to identify the telephone number of the user and hence the identity of the user. This identity information may be used to retrieve a stored profile for that user. The control module 113 then transmits the validation key to the navigation control unit 13 mounted in the user's vehicle 2 and then transmits a request for a Full Fix from the user's navigation control unit 13. Once the control module 113 receives the Full Fix identifying the user's latest position, it passes the call to the operator terminal 129 so that the human operator can speak with the user. During this dialogue, the human operator asks the user where he wishes to go and types in the response into the operator terminal 129. This destination information is then passed to the control module 113 which passes the desired destination together with the user's latest position information to the location server 123. The location server 123 in turn accesses stored geographical data (not shown) to determine a route to that destination from the user's latest position. This determined route is then passed to a navigation server 125 which is used to generate appropriate navigation instructions as the user progresses from his latest position towards the destination.

In this embodiment, the instructions generated by the navigation server 125 are in text format which are passed to the control module 113 where they are either transmitted to the user as text or are converted into speech using the text-to-speech synthesiser 127. In order that the navigation server 125 can track the user's current position, the control module 113 requests position updates from the user's navigation control unit 13 and informs the navigation server 125 accordingly. In particular, in this embodiment, the control module 113 controls the transmission of requests for position updates, such as requests for one or more of the short fix messages in order to update the original position fix. Alternatively, or in addition, the control module 113 can transmit a streaming plan to the user's navigation control unit 13 so that it will transmit the position updates automatically to the navigation control centre 11. In either case, the position updates are passed to the navigation server 125 which can track the user along the calculated route and output appropriate navigation instructions at appropriate times, such as when the user approaches a junction. Further, if the user deviates from the planned route, this is detected by the navigation server 125 which generates further instructions to return the user to the desired route. Additionally, in this embodiment, the control module 113 can also pass the navigation instructions to the operator terminal 129 so that the human operator can provide the navigation instructions directly to the user if desired.

In this embodiment, the control module 113 is responsible for transmitting the various messages defined in Table 1 above at the appropriate times, for controlling and requesting data from the navigation control unit 13. In particular, in this embodiment, the control module 113 is responsible to define the stream plan transmitted from the navigation control unit of each user and is operable to monitor temperatures and usage counts in order to monitor the operation of the user's navigation control units for malfunctions and the like.

### Modifications and Alternative Embodiments

A description has been given above of a navigation system employing a mobile navigation control unit and a fixed navigation control centre. The mobile navigation control unit was secured to the user's vehicle and was connectable to the user's mobile telephone via a hands-free kit. As those skilled in the art will appreciate, other configurations are possible. For example, the mobile navigation control unit may be entirely formed within the mobile telephone and may therefore be carried and used whilst the user is away from the vehicle. Alternatively, it may form part of a hand-held personal digital assistant (PDA), a laptop PC or the like.

In the above embodiment, the driving instructions that were generated were sent to the user either as text messages or as voice messages. As an alternative or in addition, the system may transmit a "thumbnail" sketch or map of the route to be taken. This may be transmitted either as a bit map or as a series of vectors representing the route to be traversed.

In the above embodiment, the navigation control centre determined a set of user understandable driving instructions which were then transmitted to the user when appropriate. In an alternative embodiment, the driving instructions may be downloaded at once to the mobile telephone which could then track the user's progress along the calculated route and issue the driving instructions as appropriate.

In the above embodiment, a single navigation control centre was provided. As those skilled in the art will appreciate, several navigation control centres may be provided, each operating within a distinct locality of a geographic region. For example, several navigation control centres may be provided in and around large cities whilst one or two may be provided between the cities in more rural areas. In such an embodiment, the control centres would be arranged to communicate with each other so that as a user enters the geographic area of another navigation control centre, a "handover" procedure can be performed. In this way, the navigation control centres form a distributed network of navigation centres. Further, more than one server may be provided for each geographic locality in order to share the management and processing of navigation queries.

In the navigation control system described above, a road network database and a traffic database are preferably used to provide information for route calculation. As those skilled in the art will appreciate, these databases may be provided by third party systems, with the navigation control system only operating to use the data from those databases.

In the above embodiment, the user inputs the navigation query from the user's mobile telephone. As an alternative users can input their navigation query and receive the navigation instructions through, for example, an Internet connection to the navigation control centre. In this case, when the user is planning the route, the user may use a fixed landline connection to the Internet. However, during the route, the user will need to use a mobile communication link between the user and the navigation control centre.

In the above embodiment, the route calculation unit calculated the best route from the specified start location to the specified end location. In an alternative embodiment, the route calculation unit may calculate the best route together with one or more alternative routes that the user may take. The system need not inform the user of these alternative routes but may simply store them for use if part of the best route becomes congested. Further, even if the best route doesn't deteriorate, one of the alternative routes might improve sufficiently for it to be worth mentioning. For example, one of the alternative routes might have had a blockage when the original route was being calculated which subsequently cleared and which may offer the user a significant reduction in the journey time. In this case, the system could output to the user the proposed new route.

In the above embodiment, the data transmitted between the navigation control unit and the remote navigation control centre were transmitted as DTMF tones. As those skilled in the art will appreciate, this data can be transmitted using different modulation techniques. For example, the messages may be converted into binary format and transmitted using standard PSK, ASK, FSK etc. techniques. Further, it is not essential to transmit the data in the voice channel established between the mobile telephone and the mobile telephone network. The data may be transmitted over a separate data channel which is time-multiplexed with the voice data to be transmitted. Further, instead of two tones, the data to be transmitted may be modulated onto any number of audio tones. The use of DTMF tones is preferred because it is an internationally recognised standard, because DTMF generator and decoder chips are readily available and because DTMF detection is already built into standard call centre equipment.

In the above embodiment, certain DTMF characters were reserved either for user input or for use as termination characters. This meant that the delta coder could only encode nine different characters, whereas the message generator could generate ten different characters. This was overcome through the use of the transmission mapping unit (and in the decoding in the use of the reception mapping unit) to perform a mapping between the different character sets. However, if one less character were reserved for user input, then it would not be necessary to have the transmission mapping unit or the reception mapping unit. This is illustrated in Figure 4A and Figure 7 by the dashed box around these units.

As a further modification to the system described above, the last valid fix obtained from the GPS receiver may be stored in a non-volatile memory and updated as and when new valid fixes are obtained. In this way, if power is removed from the navigation control unit (such as when the user switches off the engine of the vehicle), the last valid fix will be available the next time the vehicle is started. Such an embodiment is advantageous since the GPS receiver is likely to take some time to obtain a first valid fix after power is initially resumed and the stored fix is likely to provide a good enough estimate of the current position, at least for route planning purposes. The non-volatile memory used may be, for example, a battery backed-up RAM or an EEPROM. The difficulty with using an EEPROM however, is that there is a limit to the number of times data may be written to it. In this case, the system may be arranged not to update the saved position when the vehicle is travelling above a predetermined speed and if travelling below a predetermined speed, only to update the stored position once the latest position is more than some fixed distance from the last saved fix. Alternatively still, a back-up battery or capacitor may be used to provide energy after power has been removed so that the last valid fix is only stored in the EEPROM just before the navigation control unit powers down.

In the above embodiments, a mobile telephone was used to provide a communication link between the navigation control unit in the user's vehicle and the remote navigation control centre. As those skilled in the art will appreciate, other transmitter and receiver systems may be used. However, a cellular telephone is preferred because of its availability.

In the above embodiment, a GPS receiver was provided internal to the navigation control unit mounted in the user's vehicle. As those skilled in the art will appreciate, the GPS receiver may be provided external to the navigation control unit and may simply supply GPS data to the navigation control unit for use in the same way.

In the above embodiment, a GPS receiver was used to provide location data identifying the current location of the user's vehicle. As those skilled in the art will appreciate, other location-based systems may be used to provide this current location information. For example, other satellite navigation systems may be used such as the Russian-based satellite positioning system called Glonass. Alternatively, the mobile telephone or the mobile telephone network can identify the current location of the mobile telephone based on the radio signals within the mobile telephone network. This can be achieved, either by monitoring the signals received by the handset from a number of base stations whose locations are known and/or by monitoring the signal from the handset received by a number of base stations of known location. Either the relative signal strengths or the relative timing of synchronised signals may be measured. In such an embodiment, the GPS receiver may be omitted.

Various techniques have been described above for generating messages and for transmitting them over a communications link. Whilst these techniques have been described in relation to a navigation system, many of the techniques are applicable in other fields. For example, the particular techniques for encoding and decoding the DTMF tones and the techniques for calculating the checksum may be used in other signalling systems.

In the above embodiment, a two-digit checksum value was added to the end of each message transmitted from the navigation control unit to the remote navigation control centre. A similar checksum was also calculated for commands transmitted from the remote navigation control centre to the navigation control unit which defined new streaming plans. In calculating the checksum value that was used, each DTMF character in the message was mapped to a prime number lying between "00" and "99". As those skilled in the art will appreciate, this is not essential. The DTMF characters do not need to be mapped at all and could be used directly or if they are to be mapped they do not need to be mapped to prime numbers. Further, as described above, the checksum value is doubled before adding in the next mapped value. This ensured that the checksum value that was calculated for the digit sequence was dependent upon the order of the digits in the sequence. However, as those skilled in the art will appreciate, other functions may be applied to the current checksum value in order to achieve this order dependence. For example, the interim checksum value may be multiplied by three or it may be squared. The only requirement is that the function applied to the interim checksum value is a monotonic function, i.e. one which does not provide the same output value for different input values. Further, in the above embodiment, when the checksum value was doubled or when the mapped value was added to the checksum value, the calculation was performed with end-around carry. With a checksum that can take a value of between 0 and 99, this corresponds to performing modulo 99 calculations. However, as those skilled in the art will appreciate, instead of performing the end-around carry or modulo 99 addition at each step in the calculation, the end-around carry or modulo 99 addition can be done once at the end of the checksum calculation.

In the above embodiment, a number of processing units of the user's navigation control unit and the navigation control centre have been described. As those skilled in the art will appreciate, these processing units may be dedicated hardware circuits or they may be computer software modules run on a conventional programmable processor. A computer program or programs used to configure such a programmable processor to carry out the processing discussed above may be in the form of source code, object code, a code intermediate source and object code such as a partially compiled form, or in any other form. Such computer programs may be stored in a memory at the time of manufacture of the device or it may be loaded into memory by either downloading the program file from, for example, the Internet or from a storage medium such as a CD ROM or the like.

In an embodiment in which the navigation control unit is controlled by software, the remote navigation control centre may be arranged to download updates to the software in order to reconfigure the operation of the navigation control unit. The software updates may be provided in order to add or remove functionality of the user's navigation control unit. In such an embodiment, the software update may be transmitted via the mobile telephone in the same way that the commands given in Table 1 were transmitted in the above embodiment. Alternatively, the software updates may be downloaded from some other means. If the software updates are transmitted as DTMF tones or the like over the telephone link, then preferably the software would be transmitted together with a checksum such as the one described above. This ensures that the user's navigation control unit can detect if the software has become corrupted during the transmission and can request the update to be transmitted again if it has become corrupted.

In the above embodiment, a delta encoding technique was described which ensured that no two consecutive DTMF tones that were transmitted were the same. The same result can be achieved by other techniques. For example, one of the DTMF tones may be specifically assigned to identify a repeat character. For example, if the character sequence "99" were to be transmitted, this may be converted to the sequence "9#" where the # symbol represents the fact that the previous character is to be repeated. If the sequence to be transmitted is "999", then this would be transmitted as "9#9" etc.

In the above embodiment, the user's navigation control unit was arranged to stop operation upon the activation of certain keys on the mobile telephone by the user. This function was provided so that the user can signal requests to the remote navigation server independently of the navigation control unit. Instead of or in addition to having such user reserved keys, the navigation control unit may also be responsive to speech signals from the user. In such an embodiment, the microphone associated with the hands free kit would be connected to a voice detection circuit which could then control the operation of the navigation control unit upon detection of the user's voice.

In the above embodiment, the remote navigation control centre was used to transmit requests and commands to the user's navigation control unit. In an alternative embodiment, instead of and/or in addition to transmitting such requests and messages, the remote navigation server can be arranged to transmit data (such as a sound file) to the user's navigation control unit. This downloaded data may then be "played" out to the user via the speaker either automatically or upon subsequent command by the remote navigation control centre. Alternatively, the sound file may be output upon the user's navigation control unit detecting proximity to a predetermined location. Such an embodiment provides the advantage that the user's navigation control unit can continue delivering navigation data to the remote navigation control centre while playing the audio instructions to the user. Such data may be transmitted from the remote navigation control centre to the user's navigation control unit either using the above DTMF transmission protocol or using some other data protocol via the telephone. Alternatively, the data may be downloaded via some other communication system.

In the above embodiment, the navigation data transmitted from the user's navigation control unit to the remote navigation control centre and the requests and commands transmitted from the remote navigation control centre to the user's navigation control unit were transmitted using a delta encoding scheme which ensured that no two consecutive characters that were transmitted are the same. As those skilled in the art will appreciate, this is not essential. Other encoding schemes may be employed. Further, the data to be transmitted between the user's navigation control unit and the remote navigation control centre may be encrypted to provide security for the data transfers. In such an embodiment, an appropriate encryption and decryption unit would be provided at each end of the communication link. These encryption systems may use any standard symmetric or asymmetric encryption technique. However, the use of such encryption is not preferred in an embodiment which uses DTMF tones to transmit the data, since the encryption would significantly increase the amount of data that would have to be transmitted for a given position fix.

In the above embodiment, a particular checksum technique was used to calculate a checksum for each message transmitted from the user's navigation control unit to the remote navigation control centre. As those skilled in the art will appreciate, it is not essential to calculate or transmit such a checksum. However, providing some form of mechanism to validate the received data is preferred so that errors in the transmission can be detected. Further, as those skilled in the art will appreciate, it is not essential to use the particular checksum technique described above. Other simpler checksum techniques may be used. Further, in the particular checksum process described above, the characters in the message were processed in sequential order from the first character in the message to the last character in the message. As those skilled in the art will appreciate, this is not essential. The checksum may be calculated by processing the characters in the message in any predetermined order.

## Claims

1. A navigation guidance system comprising a user unit and a remote navigation server,
the user unit comprising:
means for storing location data identifying the current location of the user unit;
means for generating a sequence of audio tones representative of the current location of the user unit in dependence upon the stored location data; and
means for transmitting the generated sequence of audio tones to said remote navigation server;
the remote server comprising:
means for receiving said sequence of audio tones transmitted from said user unit representative of the current location of said user unit;
means for processing the received sequence of audio tones to determine the current location of the user unit;
means for determining navigation guidance information in dependence upon the current location of the user unit; and
means for transmitting the determined navigation guidance information to said user unit;
wherein said user unit further comprises means for encoding said stored location data representative of the current location of the user unit so that no two consecutive audio tones within said sequence of audio tones generated by said generating means are the same; and
wherein said processing means of said remote server is operable to perform a decoding corresponding to the inverse of the encoding performed by said encoding means of said user unit, to determine the current location of the user unit.

2. A system according to claim 1, wherein the location data is represented by a sequence of characters from a predetermined character set and wherein said generating means is operable to generate a different audio tone or a different set of audio tones for each character of said predetermined character set.

3. A system according to claim 2, wherein said generating means is operable to generate one or more audio tones having different frequencies for each character of said predetermined character set.

4. A system according to claim 2 or 3, wherein said generating means is operable to generate two or more different audio tones substantially simultaneously for each character of said predetermined character set.

5. A system according to claim 4, wherein said generating means is operable to generate different DTMF tones for each character of said predetermined character set.

6. A system according to any of claims 2 to 5, wherein said encoding means is operable to encode said location data to ensure that no two consecutive characters within said sequence of characters are the same.

7. A system according to any of claims 2 to 6, wherein said location data is represented by a sequence of characters from a first predetermined character set, wherein said encoding means is operable to encode said location data using a second predetermined character set having a different number of characters to the number of characters of said first predetermined character set and wherein the system further comprises a mapping unit for mapping the sequence of characters representative of the location data defined from said first predetermined character set to a second sequence of characters representative of said location data defined from said second predetermined character set, for encoding by said encoding means, and wherein said remote server further comprises a mapping unit for performing an inverse mapping to the mapping performed by the mapping unit of said user unit.

8. A system according to any preceding claim, wherein said location data is an absolute measure of the current position of the user unit on the earth's surface.

9. A system according to claim 8, wherein said location data is representative of the latitude and longitude of the user unit on the earth's surface.

10. A system according to any of claims 1 to 7, wherein said location data is a non-unique measure of the current position of the user unit on the earth's surface.

11. A system according to claim 10, wherein said location data is representative of a portion of the latitude or a portion of the longitude of the user unit on the earth's surface.

12. A system according to claim 10 or 11, wherein the location data is representative of a difference in position from a previous position fix transmitted to said remote server and wherein the size of the location data to be transmitted depends upon the difference in position to be transmitted to said remote server.

13. A system according to any preceding claim, wherein said user unit further comprises means for receiving updates of said location data from a positioning system, wherein said generating means is operable to generate a sequence of audio tones representative of the updated location of the user unit and the transmitting means is operable to transmit said sequence of audio tones representative of the updated location to said remote navigation server.

14. A system according to claim 13, wherein said remote navigation server is operable to receive said audio tones representative of said updated location and is operable to determine further navigation guidance information in dependence upon the updated location of the user unit and is operable to transmit the determined further navigation guidance information to the user unit.

15. A system according to claim 13 or 14, wherein said user unit is operable to generate and transmit said sequence of audio tones representative of said updated position automatically at predetermined intervals or upon receipt of the updated data.

16. A system according to claim 13 or 14, wherein said user unit is operable to generate and transmit said sequence of audio tones representative of the updated position in response to a request for a position update received from said remote server.

17. A system according to any of claims 13 to 14, further comprising a positioning receiver for determining the user's current location and for generating said updates of said location data.

18. A system according to claim 17, wherein said positioning receiver is a satellite-based positioning receiver which is operable to receive signals transmitted from a plurality of satellites.

19. A system according to any preceding claim, wherein said location data includes data defining the current position of the user unit; the time of the current position fix and the current course over the ground of the user unit, wherein said user unit further comprises means for generating a plurality of different message types for transmission to said remote navigation server, each message type including a different subset of said location data and wherein said user unit has a first mode of operation in which it is operable to transmit a sequence of different message types to said remote navigation server using said generating and transmitting means; and a second mode of operation in which selected message types are transmitted to said remote server using said generating and transmitting means in dependence upon a request for the selected message type received from said remote navigation server.

20. A system according to claim 19, wherein the sequence of different message types that are transmitted by said user unit in said first mode of operation is programmable.

21. A system according to claim 20, wherein said remote server is operable to transmit a message to said user unit for programming the sequence of different message types to be transmitted during said first mode of operation of said user unit.

22. A system according to any of claims 19 to 21, wherein said user unit is arranged so that if a request for a selected message type is received from said remote navigation server while said user unit is in said first mode of operation, then the user unit is operable to insert the requested message type within the sequence of different message types being transmitted to said remote navigation server in accordance with said first mode of operation.

23. A system according to any preceding claim, wherein said transmitting and receiving means of said user unit forms part of a cellular telephone which is operable for establishing a communication link between the user unit and the remote navigation server.

24. A system according to claim 23, wherein said user unit is operable to receive the navigation instructions transmitted from said remote server over said communication link.

25. A system according to claim 24, wherein said remote server is operable to transmit said navigation instructions as voice instructions over said communications link.

26. A system according to claim 25, wherein said remote server comprises a voice synthesiser for generating said voice instructions.

27. A system according to any preceding claim, wherein said remote server is operable to transmit requests for said user unit to transmit said location data and wherein said user unit is operable to transmit said location data in response to a received request.

28. A system according to claim 27, wherein said remote server is operable to transmit said requests as a sequence of audio tones representing the request and wherein said user unit further comprises means for receiving the transmitted tones and means for processing the received tones to determine the request transmitted from said remote server.

29. A system according to claim 28, wherein said remote navigation server comprises means for encoding said requests so that no two consecutive audio tones within said sequence of audio tones generated by said generating means are the same and wherein said processing means of said user unit is operable to perform a decoding corresponding to the inverse of the encoding performed by said encoding means of said remote navigation server, to determine the transmitted request.

30. A system according to claim 28 or 29, wherein said generating means of said user unit is operable to generate said sequence of audio tones with a first predetermined period of silence between consecutive audio tones and wherein said generating means of said remote server is operable to generate said sequence of audio tones with a second different predetermined period of silence between consecutive audio tones.

31. A system according to claim 30, wherein said generating means of said user unit and said generating means of said remote server are arranged so that said first predetermined period of silence is smaller than said second predetermined period of silence.

32. A system according to any of claims 28 to 31, wherein said generating means of said user unit is operable to generate each audio tone of said sequence for a first predetermined duration and wherein said generating means of said remote server is operable to generate each tone of said sequence of audio tones with a second different predetermined duration.

33. A system according to claim 32, wherein said generating means of said user unit and said generating means of said remote server are arranged so that each audio tone generated by said generating means of said user unit is shorter in duration than the audio tones generated by said generating means of said remote server.

34. A system according to any preceding claim, wherein said user unit further comprises means for calculating a checksum for the location data to be transmitted to said remote server and wherein the generating means and transmitting means are arranged so that the transmitted sequence of audio tones is representative of the current location of the user unit and the calculated checksum; wherein said processing means of the remote server is operable to extract the checksum from the received audio tones and wherein said remote server further comprises means for verifying the checksum.

35. A system according to any preceding claim, wherein said remote server is operable to transmit data to said user unit and wherein the remote server further comprises means for calculating a checksum for the data to be transmitted to said user unit and wherein the remote server is operable to transmit the checksum together with the data to said user unit, and wherein the user unit is operable to receive the data and the checksum and further comprises means for verifying the received checksum.

36. A system according to claim 34 or 35, wherein said means for calculating a checksum for the location data comprises:
means for receiving a sequence of characters representative of the data for which a checksum value is to be calculated;
means for assigning a unique value to each unique character in the received sequence;
means for combining the value assigned to a first character of the received sequence with an initial value of said checksum to output a current checksum value;
means for processing the or each remaining character in the sequence comprising:
i) means for applying said current checksum value to a predetermined monotonic function to generate a modified checksum value; and
ii) means for combining the value assigned to a current character of the sequence of characters being processed with the modified checksum value, to output a new current checksum value; and
means for determining the checksum value for the received sequence from the checksum value output by said processing means after processing all the characters of said sequence.

37. A system according to any of claims 34 to 36, wherein said means for calculating a checksum is operable to process the characters in the sequence according to a predetermined order.

38. A system according to claim 37, wherein said checksum calculating means is operable to process each character in the sequence according to the order in which the character is located in the sequence.

39. A system according to any preceding claim, further comprising one or more other user units which are operable to transmit location data to said remote server and which are operable to receive navigation guidance instructions back from said remote server.

40. A system according to any preceding claim, further comprising a plurality of remote servers each associated with a respective geographical area and wherein said user unit is operable to transmit said location data to a selected one of said remote navigation servers.

41. A system according to claim 40, wherein said user unit is operable to transmit said location data to the nearest remote navigation server.

42. A system according to any preceding claim, wherein said remote server is operable to transmit a validation key to said user unit and wherein said user unit is operable to transmit said location data during a predetermined period after receipt of said validation key and after said predetermined period is operable to transmit a validation lapsed signal to said remote server.

43. A navigation guidance system comprising a user unit and a remote navigation server,
the remote server comprising:
means for generating a sequence of audio tones representative of a control command for the user unit;
means for transmitting said generated sequence of audio tones to said user unit;
means for receiving an indication of the current location of the user unit;
means for determining navigation guidance information in dependence upon the current location of the user unit; and
means for transmitting the determined navigation guidance information to said user unit;
the user unit comprising:
means for receiving said sequence of audio tones transmitted from said remote navigation server corresponding to said control command;
means for processing the received audio tones to determine the control command transmitted from said remote navigation server; and
means for controlling the operation of said user unit in dependence upon the received control command;
wherein said remote navigation server comprises means for encoding said control command so that no two consecutive audio tones within said sequence of audio tones generated by said generating means are the same; and
wherein said processing means of said user unit is operable to perform a decoding corresponding to the inverse of the encoding performed by said encoding means of said remote navigation server, to determine the transmitted control command.

44. A navigation guidance system comprising a user unit and a remote navigation server,
the user unit comprising:
means for receiving a sequence of audio tones transmitted from said remote navigation server, which audio tones represent a request for the user unit to transmit location information indicative of a current location of the user unit;
means for processing the received audio tones to determine the request transmitted from said remote navigation server;
means for generating, in response to the determined request, a sequence of audio tones representative of the current location of the user unit; and
means for transmitting the generated sequence of audio tones to said remote navigation server;
the remote server comprising:
means for generating said sequence of audio tones representative of a request for the user unit to transmit said location information;
means for transmitting said generated sequence of audio tones to said user unit;
means for receiving said sequence of audio tones transmitted from said user unit representative of the current location of the user unit;
means for processing the received sequence of audio tones to determine the current location of the user unit;
means for determining navigation guidance information in dependence upon the current location of the user unit; and
means for transmitting the determined navigation guidance information to said user unit;
wherein said generating means of said user unit and said generating means of said remote server are operable to generate said sequences of audio tones with periods of silence between consecutive audio tones; and
wherein the generating means of the user unit is operable to generate said sequence of audio tones having periods of silence between consecutive audio tones which are different to the periods of silence between the audio tones generated by said generating means of said remote server.

45. A navigation guidance system comprising a user unit and a remote navigation server,
the user unit comprising:
means for receiving position data from a positioning unit, the position data including data defining the longitude and latitude of the user unit on the surface of the earth at a current time point;
means for receiving a request for a subset of the received position data identifying a portion of the longitude and/or latitude of the current position of the user unit;
means for filtering the received position data in dependence upon the received request to generate said subset of said position data identifying a non-unique longitude and/or a non-unique latitude of said current position; and
means for transmitting said filtered position data to said remote server;
the remote server comprising:
means for transmitting a request for a subset of the position data identifying the current position of the user unit on the earth's surface;
means for receiving the filtered position data transmitted from said user unit;
means for determining navigation guidance information in dependence upon the received filtered position data; and
means for transmitting the determined navigation guidance information to said user unit.

46. A navigation guidance system comprising a user unit and a remote navigation server,
the user unit comprising:
means for receiving position data from a positioning unit;
means operable to generate a plurality of different message types for transmission to said remote navigation server, each message type including a different subset of said received position data; and
means for transmitting messages to said remote server;
the remote server comprising:
means for receiving messages transmitted from said user unit;
means for determining navigation guidance information in dependence upon the received messages; and
means for transmitting the determined navigation guidance information to said user unit;
wherein said user unit has a first mode of operation in which it is operable to transmit a stream of different message types to said remote navigation server; and a second mode of operation in which selected message types are transmitted to said remote navigation server in dependence upon a request for the selected message type received from said remote navigation server.

47. A navigation guidance system comprising a user unit and a remote navigation server,
the user unit comprising:
means for storing location data identifying the current location of the user unit;
means for transmitting said location data to said remote server; and
means for receiving navigation guidance information from the remote server;
the remote server comprising:
means for receiving said location data transmitted from said user unit;
means for determining navigation guidance information in dependence upon the current location of the user unit; and
means for transmitting the determined navigation guidance information to said user unit;
wherein said user unit further comprises means for inhibiting the transmission of said location data to said remote server; and
wherein said remote server is operable to transmit a validation signal to said user unit for deactivating said inhibiting means.

48. A user unit for use in a navigation system according to any preceding claim, the user unit comprising:
means for storing location data identifying the current location of the user unit;
means for generating a sequence of audio tones representative of the current location of the user unit in dependence upon the stored location data;
means for transmitting the generated sequence of audio tones to a remote navigation server; and
means for encoding said stored location data representative of the current location of the user unit so that no two consecutive audio tones within said sequence of audio tones generated by said generating means are the same.

49. A user unit for use in a navigation system according to claim 43, the user unit comprising:
means for receiving a sequence of audio tones corresponding to a control command transmitted from a remote navigation server;
means for processing the received audio tones to determine the control command transmitted from the remote navigation server; and
means for controlling the operation of the user unit in dependence upon the received control command;
wherein the received sequence of audio tones represent an encoded version of said control command, the encoding being such that no two consecutive audio tones within said sequence of received audio tones are the same, and wherein said processing means is operable to perform a decoding corresponding to the inverse of the encoding performed by the remote navigation server, to determine said control command.

50. A user unit for use in a navigation guidance system according to claim 44, the user unit comprising:
means for receiving a sequence of audio tones transmitted from a remote navigation server, which audio tones represent a request for the user unit to transmit location information indicative of a current location of the user unit;
means for processing the received audio tones to determine the request transmitted from said remote navigation server;
means for generating, in response to the determined request, a sequence of audio tones representative of the current location of the user unit; and
means for transmitting the generated sequence of audio tones to said remote navigation server;
wherein said generating means is operable to generate said sequence of audio tones having periods of silence between consecutive audio tones which are different to the periods of silence between the audio tones received from said remote navigation server.

51. A user unit for use in a navigation guidance system according to claim 45, the user unit comprising:
means for receiving position data from a positioning unit, the position data including data defining the longitude and latitude of the user unit on the surface of the earth at a current time point;
means for receiving a request for a subset of the received position data identifying a portion of the longitude and/or latitude of the current position of the user unit;
means for filtering the received position data in dependence upon the received request to generate said subset of said position data identifying a non-unique longitude and/or a non-unique latitude of said current position; and
means for transmitting said filtered position data to said remote server.

52. A user unit for use in a navigation guidance system according to claim 46, the user unit comprising:
means for receiving position data from a positioning unit;
means operable to generate a plurality of different message types for transmission to said remote navigation server, each message type including a different subset of said received position data; and
means for transmitting messages to said remote server;
wherein said user unit has a first mode of operation in which it is operable to transmit a stream of different message types to said remote navigation server; and a second mode of operation in which selected message types are transmitted to said remote navigation server in dependence upon a request for the selected message type received from said remote navigation server.

53. A user unit for use in a navigation system according to claim 47, the user unit comprising:
means for storing location data identifying the current location of the user unit;
means for transmitting said location data to said remote server; and
means for receiving navigation guidance information from the remote server;
wherein said user unit further comprises means for inhibiting the transmission of said location data to said remote server; and
means for deactivating said inhibiting means in response to a validation signal received from said remote server.

54. A user unit according to any of claims 48 to 53, further comprising any of the user unit features claimed in any of claims 2 to 42.

55. A navigation server for use in a navigation guidance system according to any of claims 1 to 42, the navigation server comprising:
means for receiving sequences of audio tones transmitted from a user unit representative of the current location of the user unit;
means for processing the received sequence of audio tones to determine the current location of the user unit;
means for determining navigation guidance information in dependence upon the current location of the user unit;
means for transmitting the determined navigation guidance information to the user unit;
wherein the received sequence of audio tones represent an encoded version of said current location of the user unit, the encoding being such that no two consecutive audio tones within said sequence of received audio tones are the same, and wherein said processing means is operable to perform a decoding corresponding to the inverse of the encoding performed by said user unit, to determine the current location of the user unit.

56. A navigation server for use in a navigation guidance system according to claim 43, the navigation server comprising:
means for generating a sequence of audio tones representative of a control command to be transmitted to a user unit;
means for transmitting the generated sequence of audio tones to said user unit;
means for receiving an indication of the current location of the user unit;
means for determining navigation guidance information in dependence upon the current location of the user unit; and
means for transmitting the determined navigation guidance information to said user unit;
wherein the remote navigation server further comprises means for encoding said control commands so that no two consecutive audio tones within said sequence of audio tones generated by said generating means are the same.

57. A navigation server for use in the navigation guidance system according to claim 44, the navigation server comprising:
means for generating a sequence of audio tones representative of a request for a user unit to transmit location information identifying the current location of the user unit;
means for transmitting said generated sequence of audio tones to said user unit;
means for receiving a sequence of audio tones transmitted from said user unit representative of the current location of the user unit;
means for processing the received sequence of audio tones to determine the current location of the user unit;
means for determining navigation guidance information in dependence upon the current location of the user unit; and
means for transmitting the determined navigation guidance information to said user unit;
wherein said generating means of said remote server is operable to generate said sequence of audio tones having a period of silence between consecutive audio tones which are different to the periods of silence between the audio tones received from said user unit.

58. A navigation server for use in a navigation guidance system according to claim 45, the navigation server comprising:
means for transmitting a request for a subset of position data identifying the current position of a user unit on the earth's surface, which position data is stored in said user unit;
means for receiving the subset of the position data transmitted from said user unit;
means for determining navigation guidance information in dependence upon the subset of the position data; and
means for transmitting the determined navigation guidance information to said user unit.

59. A navigation server for use in a navigation guidance system according to claim 46, the navigation server comprising:
means for receiving messages transmitted from a user unit;
means for determining navigation guidance information for the user unit in dependence upon the received messages; and
means for transmitting the determined navigation guidance information to said user unit;
wherein said navigation server is operable to transmit a control command to said user unit defining a sequence of different message types to be transmitted to said navigation server, each message type including a different subset of position data indicating the current position of the user unit.

60. A navigation server for use in a navigation guidance system according to claim 46, the navigation server comprising:
means for receiving location data identifying a current location of a user unit transmitted from the user unit;
means for determining navigation guidance information in dependence upon the current location of the user unit; and
means for transmitting the determined navigation guidance information to said user unit;
wherein said user unit has means for inhibiting the transmission of said location data to said remote server and wherein said remote server is operable to transmit a validation signal to said user unit for deactivating said inhibiting means.

61. A navigation server according to any of claims 55 to 60, further comprising any of the navigation server features claimed in any of claims 2 to 42.

62. A navigation guidance method using a user unit and a remote navigation server, the method comprising the steps of:
at the user unit:
storing location data identifying the current location of the user unit;
generating a sequence of audio tones representative of the current location of the user unit in dependence upon the stored location data; and
transmitting the generated sequence of audio tones to the remote navigation server;
at the remote navigation server:
receiving said sequence of audio tones transmitted from said user unit representative of the current location of the user unit;
processing the received sequence of audio tones to determine the current location of the user unit;
determining navigation guidance information in dependence upon the current location of the user unit; and
transmitting the determined navigation guidance information to said user unit;
wherein the method further comprises the step of encoding, at said user unit, said stored location data representative of the current location of the user unit so that no two consecutive audio tones within said sequence of audio tones generated in said generating step are the same; and
wherein said processing step performed at said remote navigation server performs a decoding corresponding to the inverse of the encoding performed in said encoding step at said user unit, to determine the current location of the user unit.

63. A navigation guidance method using a user unit and a remote navigation server, the method comprising the steps of:
at the remote server:
generating a sequence of audio tones representative of a control command for the user unit;
transmitting said generated sequence of audio tones to said user unit;
receiving an indication of the current location of the user unit;
determining navigation guidance information in dependence upon the current location of the user unit; and
transmitting the determined navigation guidance information to said user unit;
at the user unit:
receiving said sequence of audio tones transmitted from said remote navigation server corresponding to said control command;
processing the received audio tones to determine the control command transmitted from said remote navigation server; and
controlling the operation of said user unit in dependence upon the received control command;
wherein the method further comprises the step of encoding, at said remote navigation server, said control command so that no two consecutive audio tones within said sequence of audio tones generated in said generating step are the same; and
wherein said processing step performed at said user unit performs a decoding corresponding to the inverse of the encoding performed in said encoding step at said remote server, to determine the transmitted control command.

64. A navigation guidance method using a user unit and a remote navigation server, the method comprising the steps of:
at the user unit:
receiving a sequence of audio tones transmitted from said remote navigation server, which audio tones represent a request for the user unit to transmit location information indicative of a current location of the user unit;
processing the received audio tones to determine the requests transmitted from said remote navigation server;
generating, in response to the determined request, a sequence of audio tones representative of the current location of the user unit; and
transmitting the generated sequence of audio tones to said remote navigation server;
at the remote navigation server:
generating said sequence of audio tones representative of a request for the user unit to transmit said location information;
transmitting said generated sequence of audio tones to said user unit;
receiving said sequence of audio tones transmitted from said user unit representative of the current location of the user unit;
processing the received sequence of audio tones to determine the current location of the user unit;
determining navigation guidance information in dependence upon the current location of the user unit; and
transmitting the determined navigation guidance information to the user unit;
wherein said generating step performed at said user unit and said generating step performed at said remote server generate said sequences of audio tones with periods of silence between consecutive audio tones; and wherein the generating step of said user unit generates said sequence of audio tones having a period of silence between consecutive audio tones which is different to the period of silence between the audio tones generated in said generating step at said remote server.

65. A navigation guidance method using a user unit and a remote navigation server, the method comprising the steps of:
at the user unit,
receiving position data from a positioning unit, the position data including data defining the longitude and latitude of the user unit on the surface of the earth at a current time point;
receiving a request for a subset of the received position data identifying a portion of the longitude and/or latitude of the current position of the user unit;
filtering the received position data in dependence upon the received request to generate said subset of said position data identifying a non-unique longitude and/or a non-latitude of said current position; and
transmitting said filtered position data to said remote server;
at the remote server:
transmitting a request for a subset of the position data identifying the current position of the user unit on the earth's surface;
receiving the filtered position data transmitted from said user unit;
determining navigation guidance information in dependence upon the received filtered position data; and
transmitting the determined navigation guidance information to said user unit.

66. A navigation guidance method using a user unit and a remote navigation server, the method comprising the steps of:
at the user unit:
receiving position data from a positioning unit;
generating a plurality of different message types for transmission to said remote navigation server, each message type including a different subset of said received position data; and
transmitting messages to said remote server;
at the remote server:
receiving messages transmitted from said user unit;
determining navigation guidance information in dependence upon the received messages; and
transmitting the determined navigation guidance information to said user unit;
wherein said user unit has a first mode of operation in which during said transmitting step, said user unit transmits a stream of different message types to said remote navigation server; and a second mode of operation in which said transmitting step transmits a selected message type to said remote server in dependence upon a request for the selected message type received from the remote server.

67. A navigation guidance method using a user unit and a remote navigation server, the method comprising the steps of:
at the user unit:
storing location data identifying the current location of the user unit;
transmitting said location data to said remote server; and
receiving navigation guidance information from the remote server;
at the remote server:
receiving said location data transmitted from said user unit;
determining navigation guidance information in dependence upon the current location of the user unit; and
transmitting the determined navigation guidance information to said user unit;
wherein the method further comprises the step of, at said user unit, inhibiting the transmission of said location data to said remote server; and deactivating the inhibiting step upon the receipt of a validation signal transmitted from said remote server; and, at said remote server, the step of transmitting said validation signal to said user unit.

68. A computer readable medium storing computer executable instructions for causing a programmable computer device to become configured as a user unit according to any of claims 48 to 54 or a navigation server according to any of claims 55 to 61.

69. A computer instructions product comprising computer instructions for causing a programmable computer device to become configured as a user unit according to any of claims 48 to 54 or a navigation server according to any of claims 55 to 61.

70. A signalling system comprising first and second signalling devices,
the first signalling device comprising:
means for receiving data for transmission to the second signalling device;
means for generating a sequence of audio tones representative of the data to be transmitted to said second signalling device; and
means for transmitting the generated sequence of audio tones to said second signalling device;
the second signalling device comprising:
means for receiving the sequence of audio tones transmitted from said first signalling device; and
means for processing the received audio tones to recover said data;
wherein said first signalling device further comprises means for encoding said received data so that no two consecutive audio tones within said sequence of audio tones generated by said generating means are the same; and
wherein said processing means of said second signalling device is operable to perform a decoding operation corresponding to the inverse of the encoding performed by said encoding means of said first signalling device, to recover said data.

71. A signalling system comprising first and second signalling devices each comprising:
means for storing data for transmission to the other signalling device;
means for generating a sequence of audio tones representative of the data to be transmitted to the other signalling device;
means for transmitting the generated sequence of audio tones to the other signalling device;
means for receiving a sequence of audio tones transmitted from the other signalling device; and
means for processing the received audio tones to recover the data transmitted from the other signalling device;
wherein said first signalling device further comprises means for encoding said data for transmission to the second signalling device so that no two consecutive audio tones within said sequence of audio tones generated by said generating means are the same; and
wherein said processing means of said second signalling device is operable to perform a decoding operation corresponding to the inverse of the encoding performed by said encoding means of said first signalling device, to recover the data transmitted from said first signalling device.

72. An apparatus for calculating a checksum value for a message comprising a sequence of characters, the apparatus comprising:
means for receiving the sequence of characters for which a checksum value is to be calculated;
means for assigning a unique value to each unique character in the message;
means for combining the value assigned to a first character of the message with an initial value of said checksum to output a current checksum value;
means for processing the or each remaining character in the sequence comprising:
i) means for applying said current checksum value to a predetermined monotonic function to generate a modified checksum value; and
ii) means for combining the value assigned to a current character of the sequence of characters being processed with the modified checksum value, to output a new current checksum value; and
means for determining the checksum value for the message from the current checksum value output by said processing means after processing a last character of the message.

73. An apparatus according to claim 72, wherein said processing means is operable to process the characters in the sequence according to a predetermined order.

74. An apparatus according to claim 73, wherein said processing means is operable to process each character in the sequence according to the order in which the character is located in the sequence.

75. An apparatus according to any of claims 72 to 74, wherein said assigning means is operable to assign a prime number to each character.

76. An apparatus according to any of claims 72 to 75, wherein said checksum value can take any value within a predetermined range of values and wherein the said assigning means is operable to assign values to said characters that are evenly distributed over said range of values.
